(19) Europäisches Patentamt / European Patent Office / Office européen des brevets

(11) **EP 2 965 499 B1**

(12) **EUROPEAN PATENT SPECIFICATION**

(45) Date of publication and mention
of the grant of the patent:
**12.09.2018 Bulletin 2018/37**

(21) Application number: **14760314.6**

(22) Date of filing: **04.02.2014**

(51) Int Cl.:
*H04N 1/46* (2006.01)  *G06T 1/00* (2006.01)
*H04N 1/60* (2006.01)  *H04N 1/62* (2006.01)
*G06K 9/46* (2006.01)  *G09G 5/02* (2006.01)

(86) International application number:
**PCT/JP2014/052982**

(87) International publication number:
**WO 2014/136530 (12.09.2014 Gazette 2014/37)**

(54) **IMAGE PROCESSING APPARATUS, IMAGE PROCESSING SYSTEM, AND IMAGE PROCESSING METHOD**

BILDVERARBEITUNGSVORRICHTUNG, BILDVERARBEITUNGSSYSTEM UND BILDVERARBEITUNGSVERFAHREN

APPAREIL DE TRAITEMENT D'IMAGE, SYSTÈME DE TRAITEMENT D'IMAGE ET PROCÉDÉ DE TRAITEMENT D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2013 JP 2013042608**

(43) Date of publication of application:
**13.01.2016 Bulletin 2016/02**

(73) Proprietor: **Ricoh Company, Ltd.**
**Tokyo 143-8555 (JP)**

(72) Inventor: **KAKINUMA, Akihiro**
**Tokyo 143-8555 (JP)**

(74) Representative: **Schwabe - Sandmair - Marx Patentanwälte Rechtsanwalt Partnerschaft mbB**
**Joseph-Wild-Straße 20**
**81829 München (DE)**

(56) References cited:
**EP-A2- 1 087 614      JP-A- 2004 253 970**
**JP-A- 2006 041 804      JP-A- 2006 180 160**
**JP-A- 2009 005 081      US-A- 5 604 610**
**US-A1- 2001 005 427      US-A1- 2004 227 964**
**US-A1- 2007 133 024**

## Description

### Technical Field

The present invention relates to an image processing apparatus, image processing system and image processing method.

### Background Art

Image data, captured by, for example, a digital camera or image data read by a scanner or the like, are used in various forms, such as an output on a recording paper or the like from various types of printers, a display on a monitor screen or the like.

Image characteristics of such image data, in many cases, may be different, even for a similar object or a similar image scene, according to differences in characteristics of the digital camera or the scanner, or differences in output targets of respective manufacturers. The image data do not always reproduce a color tone or a gray level such as to satisfy a user.

Accordingly, the user needs to modify the image data in order to obtain the desired image. There are a wide variety of methods of modifying image data depending on, especially for commercial use, a purpose of use or a target (destination of distribution), and work load may increase with the number of image data to be modified.

The user has to adjust a large number of parameters, such as contrast, color phase or color balance when modifying image data. Such an adjustment process requires a high level of knowledge, technology, experience, or the like, and it may be hard to obtain the desired image.

Regarding the above problem, Japanese Published Patent Application No. 2001-251531 discloses an image processing method, which displays plural target images having different color tones, prompts a user to select the target image having a desired color tone, and changes the color tone within a specified region of image data to the color tone of the selected target image. According to the method disclosed in Japanese Published Patent Application No. 2001-251531, the user doesn't need to control the complicated image parameters, and can obtain the desired image with a simple operation.

US 2007/0133024 A1 discloses an apparatus and method for reproducing an optimized preference color using candidate images and natural languages, in which user-oriented optimized picture quality can be provided through a printer. The apparatus includes a preference color-natural language information memory which stores characteristic information of a preference color mapped on a natural language, a candidate image provider module which provides candidate images having characteristic information applied to original images, and a candidate preference image input module which inputs one image, which satisfies a user's preference, among the candidate images.

In US 5,604,610 A a method for transforming input color values of a digital image to produce suitable output color values for use by a particular device is disclosed. In this method a plurality of color transforms are stored, each such transform responds to input color values of a digital image and produces output color values which can be used by the particular device. In the method an intermediate transform which is user desirable for transforming the input color values is formed by interpolating between the plurality of transforms.

In US 2004/0227964 A1 an output device for outputting an image using image data is disclosed. This output device comprises an image quality adjustment unit for adjusting the color of an area within the image data the color of which is close to a preset memory color such that this color comes closer to a preset target color, a target color setting unit for allowing the user to set the target color, and an image output unit for outputting an image in accordance with the color-adjusted image data. A certain image quality adjustment condition can be determined using evaluation results for each of multiple image groups that contain mutually different images and respectively include at least one image from among multiple natural images used for evaluation that each have a different certain image quality.

In the colour correction apparatus disclosed in EP 1 087 614 A2, a representative color extracting unit reads from an object color information memory, a hue distributable region of an object selected by an object selecting unit and the distribution frequency in each split hue region to extract a representative color. A color correction parameter determining unit determines from the memory content of a color correction parameter memory optimum color correction parameters adapted to the representative color extracted by the representative color extracting unit. A color correction processing unit carries out, upon an input image, color correction acting only upon the representative color of the object and neighborhood colors therearound.

**Disclosure of Invention**

PROBLEM TO BE SOLVED BY THE INVENTION

However, in the image processing method disclosed in Japanese Published Patent Application No. 2001-251531, although the color tone of the image can be modified to have a color tone previously provided of the target image, the image cannot be modified to have a color tone with a characteristic other than the color tones in the target image. That is, it is difficult to modify the image data of the target images to have an expression or a feature of not the previously prepared color tones but a color tone located between them.

For example, for image data, such as human skin, in which a small change in color reproduction or gradation significantly affects the expression, a method of modification with a simple operation, which can deal flexibly with a small and continuous change in the image expression is desired.

In view of the above subject matter, it is a general object of at least one embodiment of the present invention to provide an image processing apparatus, by which a user can modify image data with a simple operation to have a desired color tone.

MEANS TO SOLVE THE PROBLEMS

The scope of the invention is laid out in the independent clams. The dependent claims constitute preferred embodiments of the invention.

In order to solve the above problem, according to an aspect of the present invention, an image processing apparatus includes a region extraction unit that extracts a conversion region from input image data; a color information acquisition unit that acquires color information from the conversion region; a target color information acquisition unit that acquires target color information, which is a target of conversion for the color information; a conversion unit that generates conversion information based on the color information and the target color information, and converts the color information based on the conversion information, to generate converted image data; a display and input unit that displays the input image data and the converted image data, and receives an input of a final conversion target, which is a final target of conversion for the color information; and a final conversion unit that generates final conversion information based on the final conversion target, and converts the color information based on the final conversion information, to generate final image data.

According to another aspect of the present invention, an image processing system includes an image processing apparatus and an information processing terminal, which are connected with each other via a network. The image processing apparatus includes a region extraction unit that extracts a conversion region from input image data; a color information acquisition unit that acquires color information from the conversion region; a target color information acquisition unit that acquires target color information, which is a target of conversion for the color information; a conversion unit that generates conversion information based on the color information and the target color information, and converts the color information based on the conversion information, to generate converted image data; and a final conversion unit that generates final conversion information based on an input final conversion target, which is a final target of conversion for the color information, and converts the color information based on the final conversion information, to generate final image data. The information processing terminal includes a display and input unit that displays the input image data and the converted image data, and receives an input of the final conversion target.

According to yet another aspect of the present invention, an image processing method includes a region extraction step of extracting a conversion region from input image data; a color information acquisition step of acquiring color information from the conversion region; a target color information acquisition step of acquiring target color information, which is a target of conversion for the color information; a conversion step of generating conversion information based on the color information and the target color information, and converting the color information based on the conversion information, to generate converted image data; a display input step of displaying the input image data and the converted image data, and receiving an input of a final conversion target, which is a final target of conversion for the color information; and a final conversion step of generating final conversion information based on the final conversion target, and converting the color information based on the final conversion information, to generate final image data.

EFFECTS OF THE PRESENT INVENTION

According to the present invention, an image processing apparatus, by which a user can modify image data with a simple operation to have a desired color tone, is provided.

3

**Brief Description of Drawings**

Fig. 1 is a diagram illustrating an example of a hardware configuration of an image processing apparatus according to a first embodiment;

Fig. 2 is a diagram illustrating an example of a functional configuration of the image processing apparatus according to the first embodiment;

Figs. 3A and 3B are diagrams illustrating an example of input image data and a conversion region according to the first embodiment;

Figs. 4A and 4B are diagrams illustrating an example of color information according to the first embodiment;

Fig. 5 is a diagram illustrating an example of display of input image data and target image data according to the first embodiment;

Figs. 6A to 6C are diagrams illustrating an example of a conversion table of the color information according to the first embodiment;

Fig. 7 is a diagram illustrating an example of display of input image data, converted image data and final image data according to the first embodiment;

Figs. 8A to 8C are diagrams illustrating examples of input of a final conversion target according to the first embodiment;

Figs. 9A to 9C are diagrams illustrating examples of generation of final target color information according to the first embodiment;

Figs. 10A and 10B are diagrams illustrating examples of weight coefficients according to the first embodiment;

Fig. 11 is a diagram illustrating an example of generation of final conversion data according to the first embodiment;

Fig. 12 is a flowchart illustrating an example of a process of image processing according to the first embodiment;

Fig. 13 is a flowchart illustrating an example of a process of acquiring the target color information according to the first embodiment;

Fig. 14 is a flowchart illustrating an example of a process of generating a final image according to the first embodiment;

Fig. 15 is a flowchart illustrating an example of a process of generating the final image according to the first embodiment;

Fig. 16 is a diagram illustrating an example of a configuration of an image processing system according to a second embodiment;

Fig. 17 is a diagram illustrating an example of a hardware configuration of an image processing apparatus according to the second embodiment;

Fig. 18 is a diagram illustrating an example of a hardware configuration of an image processing server according to the second embodiment; and

Fig. 19 is a diagram illustrating an example of a functional configuration of the image processing system according to the second embodiment.

**Best Mode for Carrying Out the Invention**

Although the present invention has been described with reference to embodiments, the present invention is not limited to these embodiments, but various variations and modifications may be made without departing from the scope of the invention as set forth in the accompanying claims.

In the following, embodiments of the present invention will be described with reference to the accompanying drawings. Meanwhile, the same reference numerals are assigned to the members which have substantially the same functions or configuration, and duplicate explanations are omitted.

[First embodiment]

<Hardware configuration of image processing apparatus>

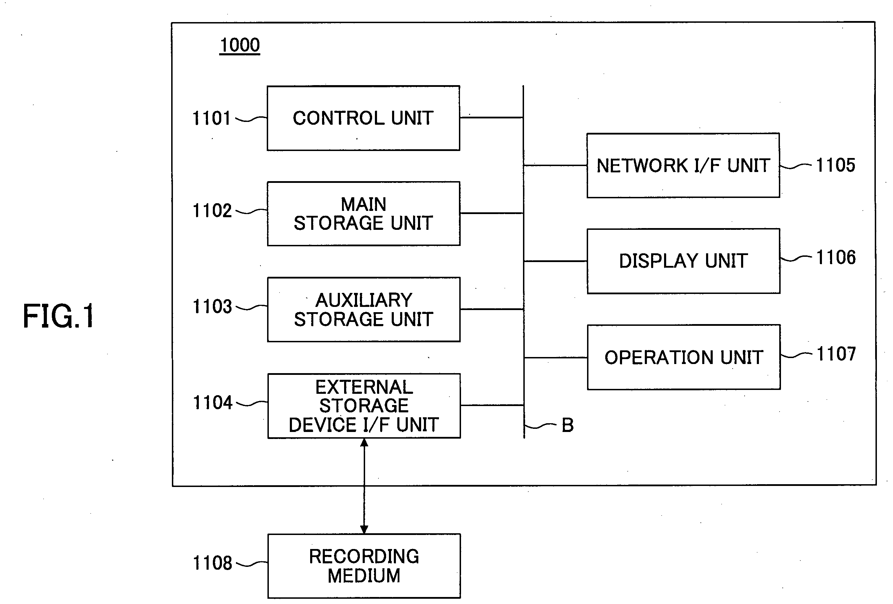

Fig. 1 illustrates a hardware configuration of an image processing apparatus according to the first embodiment.

As shown in Fig. 1, the image processing apparatus 1000 includes, a control unit 1101, a main storage unit 1102, an auxiliary storage unit 1103, an external storage device I/F unit 1104, a network I/F unit 1105, a display unit 1106 and an operation unit 1107, which are connected with each other via a bus B.

The control unit 1101 is a CPU (Central Processing Unit), which controls each unit and performs calculation and processing for data in a computer. Moreover, the control unit 1101 is a processor that executes a program stored in the main storage unit 1102 or the auxiliary storage unit. The control unit receives data from an input unit or a storage unit, calculates and processes the data, and outputs the data to an output unit or the storage unit.

The main storage unit 1102 is, for example, a ROM (Read-Only Memory), a RAM (Random Access Memory), or the like. The main storage unit 1102 stores or temporarily saves a program, such as an operating system (OS) as a basic system or application software executed at the control unit 1101, or data.

The auxiliary storage unit 1103 is, for example, a HDD (Hard Disk Drive), or the like. The auxiliary storage unit 1103 stores data related to the application software or the like.

The external storage device I/F unit 1104 is an interface between a recording medium 1108, such as a flash memory, connected via a data transmission path, such as a USB (Universal Serial Bus) and the image processing apparatus 1000.

The program stored in the recording medium 1108 is installed via the external storage device I/F unit 1104, and becomes executable by the image processing apparatus 1000.

The network I/F unit 1105 is an interface between a peripheral device having a communication device connected via a network such as a LAN (Local Area Network) or a WAN (Wide Area Network), which are configured by a data communication path of a wireless and/or a wired line and the image processing apparatus 1000.

The display unit 1106 is, for example, a display device of a liquid crystal, an organic EL (Electro Luminescence), or the like. The display unit 1106 displays an image and an operation icon, and is a user interface which performs various settings when the user uses functions, which the image processing apparatus 1000 is equipped with.

The operation unit 1107 is, for example, a key switch including a hardware key or a mouse. Moreover, the operation unit 1107 may be a touch panel, provided overlapping with the display unit 1106.

<Functional configuration of image process apparatus>

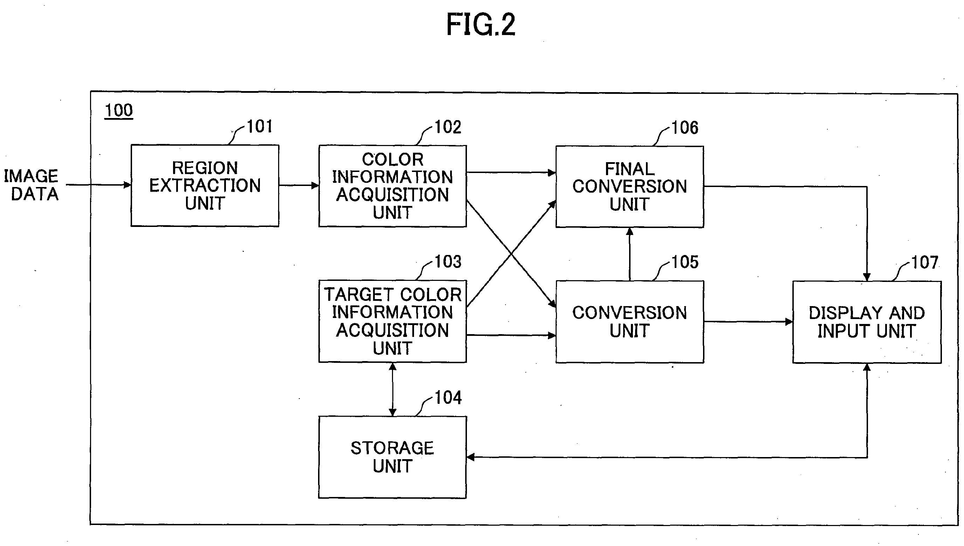

Fig. 2 illustrates a functional configuration of the image processing apparatus 100 according to the first embodiment.

As shown in Fig. 2, the image processing apparatus 100 according to the first exemplary embodiment includes a region extraction unit 101, a color information acquisition unit 102, a target color information acquisition unit 103, a storage unit 104, a conversion unit 105, a final conversion unit 106, and a display and input unit 107.

The region extraction unit 101, the color information acquisition unit 102, the target color information acquisition unit 103, the conversion unit 105, and the final conversion unit 106 are functions realized by executing a program stored in the main storage unit 1102 by the control unit 1101. The storage unit 104 is the main storage unit 1102 and the auxiliary storage unit 1103. The display and input unit 107 is realized by controlling the display unit 1106 and the operation unit 1107 by the control unit 1101.

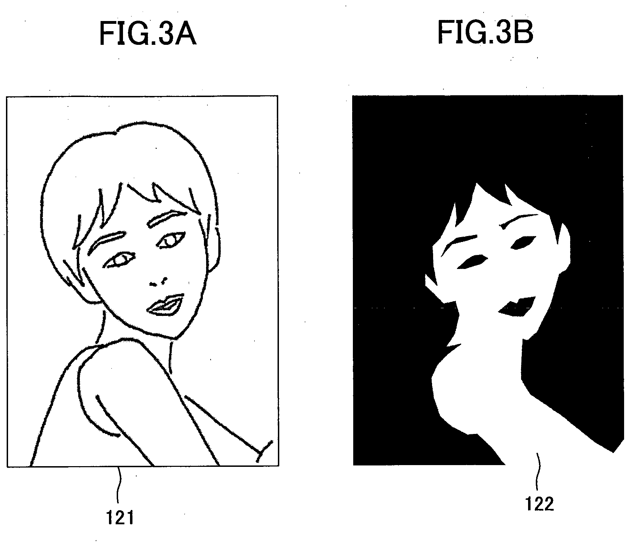

In the following, contents of a process of the respective units, which performs a conversion of a color tone within a selected region of image data input to the image processing apparatus, will be described in conjunction with data used for the image processing as shown in Figs. 3 to 11.

<<Extraction of region>>

To the image processing apparatus 100, image data including one or plural regions which are objects of the image processing are input. The region extraction unit 101 extracts a conversion region, where the color information is to be converted. The conversion region is a region selected from the input image data by a user who executes the image processing, at the display and input unit 107. The conversion region is, for example, a region of the skin, the sky, the green of plants and trees, or the like in the image data. In the following, a selection of human skin as the conversion region will be exemplified. The conversion region may be a region different from the skin region.

Figs. 3A and 3B illustrate an example of an input image data 121 input to the image processing apparatus 100, and an extraction of the conversion region 122 by the region extraction unit 101. Fig. 3A illustrates the input image data 121, and Fig. 3B illustrates the conversion region 122 (white region) extracted from the input image data 121.

Fig. 3B shows a clear dividing line between the conversion region 122 (white region) and the region other than the conversion region 122 (black region). However, the border between the conversion region 122 and the region other than the conversion region may be blurred. Furthermore, the degree of blurring may be changed at different positions.

<<Color information acquisition>>

The conversion region 122 is extracted from the input image data 121 by the region extraction unit 101, as above. Next, the color information acquisition unit 102 acquires color information of pixels included in the conversion region 122.

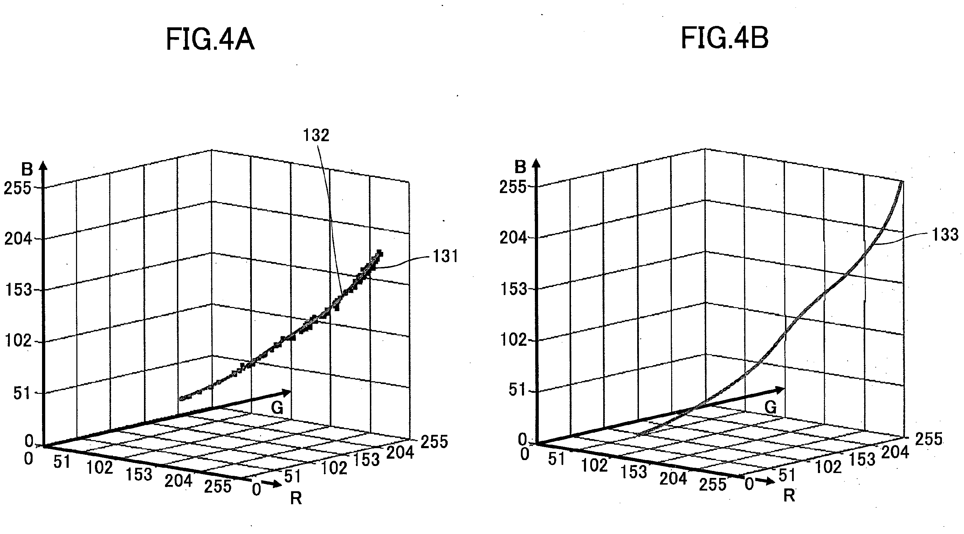

Fig. 4A illustrates the color information acquired by the color information acquisition unit 102. In Fig. 4A, color components 131 of the pixels included in the conversion region 122, acquired as eight bits tone values of RGB (0 to 255) by the color information acquisition unit 102, are plotted in a three-dimensional graph.

The image processing apparatus 100 according to the first embodiment uses the 8 bits tone values of RGB as the color components 131 of the pixels included in the conversion region 122. But various color components may be used according to the purpose of use of the processed image, and to the environment of the image processing.

For example, when the image data includes the four color versions of CMYK (Cyan, Magenta, Yellow Black), as used for offset orienting or letterpress printing, a halftone ratio (%) of CMYK as the color components is used. However, in order to express four components, at least two data sets are required, including, for example, a three-dimensional plot by three attributes of C, M and Y, and a two-dimensional plot for the remaining K, as a combination of M and K.

Moreover, as the color components, the L*a*b* color system, which is a representative of a color matching function, may be used. In this case, as the color components to be acquired, three attributes of L* (brightness), a* (degree of red to green), and b* (degree of yellow to blue), or three attributes of L* (brightness), c* (chroma) and h* (Hue) may be used. Furthermore, as the color components, not limited to the above example, but various color spaces, such as an HSV space or a YCbCr space, may be used.

The color information acquisition unit 102 preferably acquires color components 131 of all pixels included in the conversion region 122. However, the color information acquisition unit 102 may draw a sample from the pixels included in the conversion region 122 and acquire color components 131 of the sampled pixels.

By drawing a sample from the pixels and acquiring the color components 131, the problem in the case of large image data size where the data to be acquired becomes large and the processing speed decreases, can be avoided. However, in this case, pixels are preferably sampled, which include the pixel with the highest brightness point (or the minimum G tone point) and the pixel with the lowest minimum brightness point (or the maximum G tone point). Moreover, the pixels, from which color components are acquired, are preferably sampled unbiasedly, so that the acquired color components 131 can be expressed smoothly between the maximum brightness point (or the minimum G tone point) and the minimum brightness point (or the maximum G tone point).

The color information acquisition unit 102 acquires the color components 131 of the pixels included in the conversion region 122, as above. Next, the color information acquisition unit 102 calculates a three-dimensional tone function 132 from the color components 131, which quantitatively represent color tones as the color information of the conversion region 122.

In the three-dimensional graph illustrated by Fig. 4A, a solid curve along with the plotted color components 131 is the tone function 132 as color information calculated from the color components by the color information acquisition unit 102. The tone function 132 is, for example, an approximation function, obtained so that distances to data groups of the color components 131 of plural acquired pixels are minimum, by using a regression analysis.

The effective range of the tone function 132 is a range of brightness (or G tone value) between the maximum brightness (or the minimum G tone value) and the minimum brightness (or the maximum a tone value) of the color component 131 acquired by the conversion region.

<<Acquire target color information>>

The color information acquisition unit 102 acquires the tone function 132 as the color information of the conversion region 122, as above. Next, the target color information acquisition unit 103 acquires target color information, the number of which is greater than or equal to one. The acquired target color information is close to the color tone of the conversion region 122, desired by the user who executes the image processing. The target color information may not coincide with a color reproduction target, which is the user's final aim.

Fig. 4B illustrates an example of a target tone function 133 as target color information acquired by the target color information acquisition unit 103. The target tone function 133'is assumed to have the same data format as the tone function 132, which represents the color information of the conversion region 122 acquired by the color information acquisition unit 102.

When image data are input into the image processing apparatus 100 and the user, who executes the image processing, selects a conversion region 122, for example, along with the input image data 121, a list of plural target image data, stored in the storage unit 104, is displayed on the display and input unit 107. The target color information acquisition unit 103 acquires the target tone function 133 of the target image data selected by the user who executes the image processing from the storage unit 104.

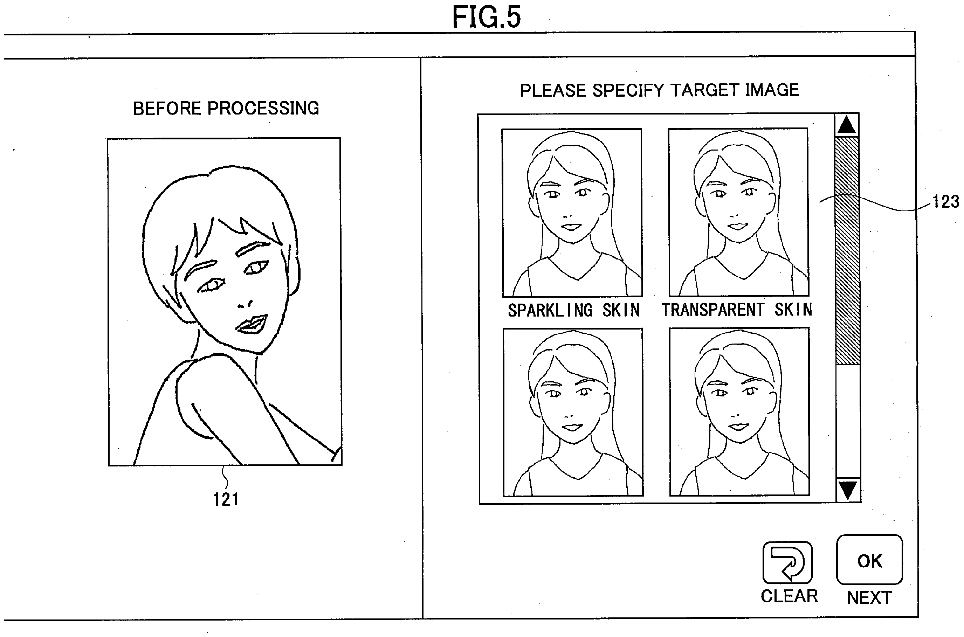

Fig. 5 is a diagram illustrating an example of the input image data 121 and the target image data group 123 on the display and input unit 107.

The storage unit 104 stores image data including a part which is often used as an object of image processing, such as human skin, the sky, or the green of plants and trees, as a target image data group 123 expressed by plural color tones. When the user executes the image processing, the conversion region 122 is selected from the input image data 121, and the display and input unit 107 acquires plural target image data groups 123 related to the conversion region 122 from the storage unit 104, and displays the acquired target image data groups.

When "human skin" is extracted as the conversion region 122, for example, a keyword, which represents a feature of each of the images in the target image data group 123, such as "sparkling", "transparent", "healthy" or the like, may be attached to the target image data group 123.

The user, who executes the image processing, selects one or more images, which is close to the desired color tone, from the plural images in the target image data group 123, displayed on the display and input unit 107. If the user's aim is to obtain a hard copy of the input image data 121 by using a printer or the like, the user may print the target image data group 123 with the printer, and select the target image data by viewing the printed target image data.

When the user who executes the image processing selects one or more image data from the target image data group 123, the target color information acquisition unit 103 acquires a target tone function 133 corresponding to the selected target image data, stored in the storage unit 104 as the target color information.

<<Converted image data generation>>

When the color information acquisition unit 102 calculates the tone function 132 in the conversion region 122 of the input image data 121, and the target color information acquisition unit 103 acquires the target tone function 133, the conversion unit 105 converts the color tone of the conversion region 122.

The conversion unit 105, at first, generates a conversion table, as conversion data used for the color tone conversion in the conversion region 122 of the input image data 121.

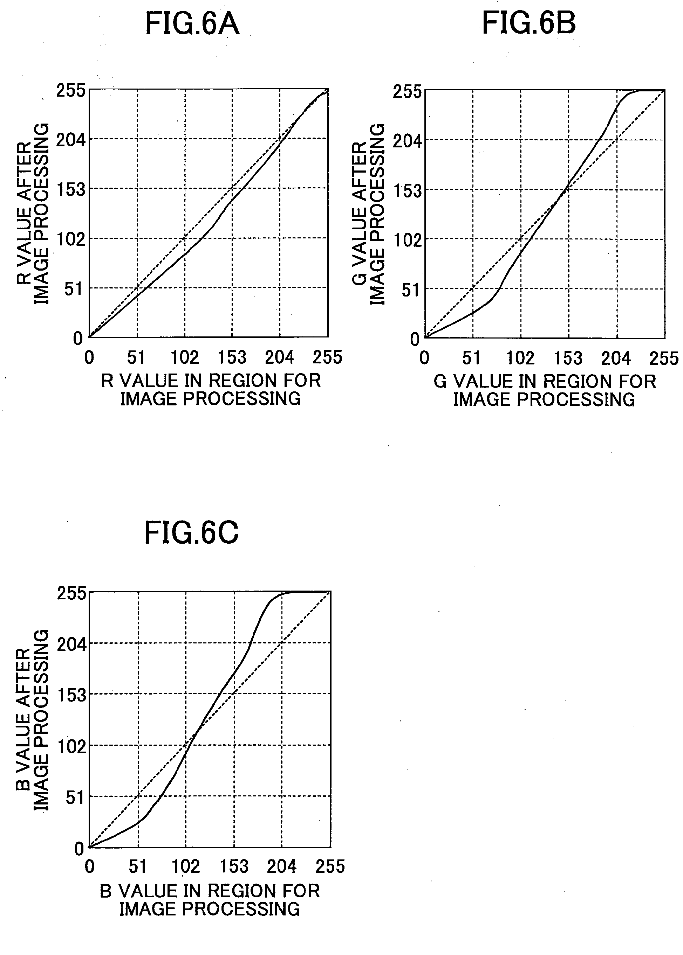

Figs. 6A to 6C are diagrams illustrating an example of a conversion table, required from the tone function 132 corresponding to the conversion region 122 of the input image data 121 and from the target tone function 133 of the target image data. Figs. 6A, 6B and 6C illustrate the conversion table of the R tone value, the conversion table of the G tone value and the conversion table of the B tone value, respectively. In each figure, the abscissa represents the tone value of the pixel in the conversion region 122, and the ordinate represents the tone value of the pixel after the conversion.

The conversion unit 105 generates a conversion table as conversion information, which linearly converts the tone function 132 of the conversion region 122 to the target tone function 133. The conversion table converts the color component values of the maximum brightness point and of the minimum brightness point in the tone function 132 to color component values of the maximum brightness point and of the minimum brightness point in the target tone value, respectively. The color component values between them are obtained by linear interpolation, so as to correspond to the target tone function 133 by a one to one relation. The conversion information is not limited to the conversion table, as described above. For example, the tone function 132 may be converted into the target tone function 133 according to a predetermined conversion relation.

When the conversion unit 105 generates the conversion table as the conversion information, the conversion unit 105 performs RGB tone conversion of all the pixels in the conversion region 122 of the input image data 121, using the conversion table. The conversion unit 105, according to the above process, generates converted image data, in which a color tone in the conversion region 122 is converted to a color tone expressed by the target tone function 133 of the selected target image data. The conversion unit 105 may perform the color tone conversion for pixels in a region other than the conversion region 122 in the same way, so that the color tone of the whole input image data 121 is converted.

In the case that the user, who executes the image processing, selects plural target image data, the conversion unit 105 obtains conversion information for each of the selected target image data, performs the color tone conversion for the input image data 121, and generates plural converted image data.

In the following, the target image data "A" and the target image data "B" are selected, the conversion unit 105 generates converted image data "A" and the converted image data "B".

<<Image display and input reception>>

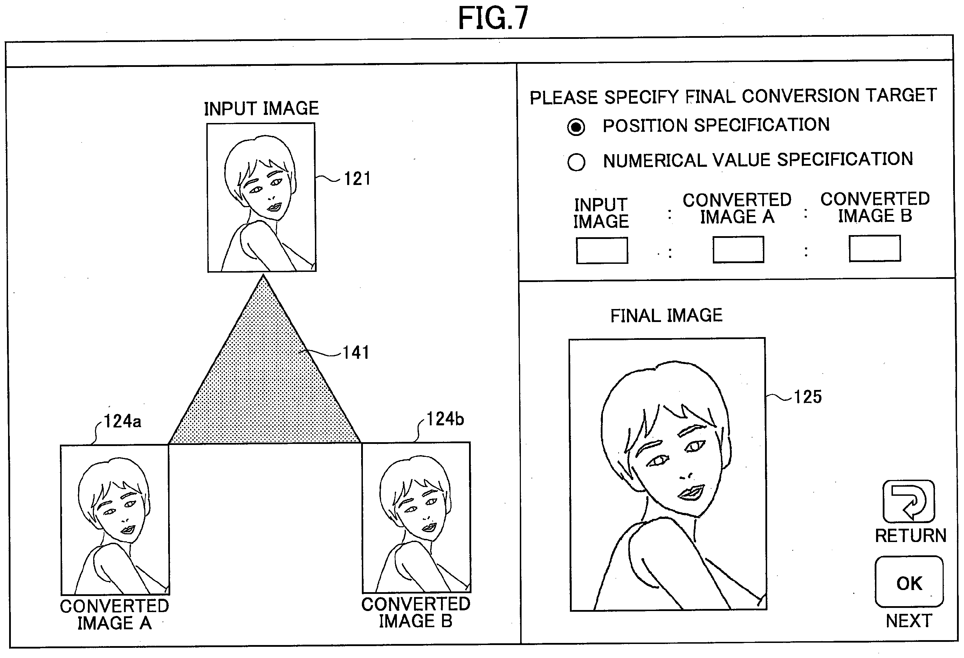

Fig. 7 is a diagram illustrating an example of the input image data 121, the converted image data "A" 124a, the converted image data "B" 124b, and the final image data 125.

As shown in Fig. 7, in the display and input unit 107, the input image data 121 is displayed in the upper left part of the screen, the converted image data "A" 124a and the converted image data "B" 124b are displayed in the lower left part. Furthermore, a final target specification region 141 surrounded by line segments, which connect two images of the above three images, is displayed simultaneously.

The final target specification region 141 is a region where the user, who executes the image processing, can specify the color tone among the input image data 121, the converted image data 124a and the converted image data 124b, as the final conversion target in the color tone conversion process for the input image data from the user. The final target specification region 141 is displayed in a line segment or a polygon, the shape of which depends on the number of the target image data selected by the user.

In the upper-right part of the screen in Fig. 7, the method of specification for the final conversion target is displayed, so as to be selectable by the user. Moreover, in the lower-right part of the screen, the final image data 125, in which the color tone is converted from that of the input image data 121 based on the input for the final conversion target, and operational buttons, such as "return", "OK" and the like.

When the user, who executes the image processing, selects "position specification" for specifying the final conversion target, the user specifies a position in the final target specification region 141 in the display and input unit 107. The user views the input image data 121, converted image data "A" 124a and the converted image data "B" 124b, displayed on the screen, and by taking account of the relationship between the displayed images, specifies a position which is close to the desired color tone in the final target specification region 141. According to the above method, the user can specify the final target from the relative positional relationship among the input image data 121, the converted image data "A" 124a and the converted image data "B" 124b, by an intuitive and simple operation.

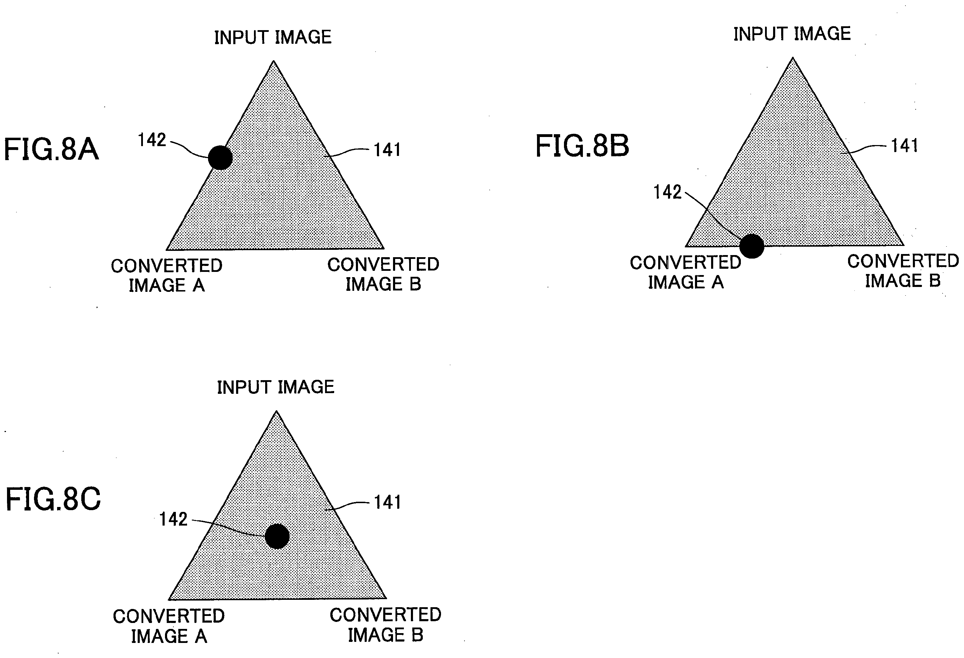

Figs. 8A to 8C are diagrams illustrating examples of position specifications in the final target specification region 141 in the display and input unit 107. In Figs. 8A to 8C, different positions specified as the final conversion target in the final target specification region 141 are shown. A black circle 142 in each figure indicates the position specified by the user who executes the image processing. The user specifies the position of the final conversion target, for example, through the operation of a mouse, a touch panel, or the like.

Fig. 8A illustrates an example where a midpoint between the input image data 121 and the converted image data "A" 124a is specified for the final conversion target. Fig. 8B illustrates an example where a point, which is between the converted image data "A" 124a and the converted image data "B" 124b and is close to the converted image data "A" 124a, is specified for the final conversion target. Fig. 8C is an example where a point at a center of the input image data 121, the converted image data "A" 124a and the converted image data "B" 124b is specified for the final conversion target.

On the other hand, when "numerical value specification" is selected for specifying the final conversion target, the user, who executes the image processing, inputs numerical values of ratios among the input image data 121, the converted image data "A" 124a and the converted image data "B" 124b.

For example, when the user who executes the image processing specifies by a numerical value the midpoint between the input image data 121 and the converted image data "A" 124a for the final conversion target, as in Fig. 8A, the input numerical value may be, for example, "(input image, converted image "A", converted image "B") is (1, 1, 0)".

Moreover, when the user specifies by a numerical value the point, which is between the converted image data "A" 124a and the converted image data "B" 124b and is close to the converted image data "A" 124a, for the final conversion target, as in Fig. 8B, the input numerical value may be, for example, "(input image, converted image "A", converted image "B") is (0, 3, 1)".

Furthermore, when the user specifies by a numerical value the point, which is the center of the input image data, the converted image data "A" 124a and the converted image data "B" 124b, for the final conversion target, as in Fig. 8C, the input numerical value may be, for example, "(input image, converted image "A", converted image "B") is (1, 1, 1)".

The display and input unit 107 displays the input image data 121, the converted image data "A" 124a and the converted image data "B" 124b, and receives the user's input for the final conversion target, as described above.

<<Generate final conversion information>>

When the final conversion target is input to the display and input unit 107, the final conversion unit 106 obtains final conversion information based on the input final conversion target, performs the color tone conversion for the conversion region 122 in the input image data 121 based on the final conversion information, and generates the final image data 125.

The final conversion unit 106 obtains the final conversion information according to either one of the two methods, which will be described in the following.

(First generation method for generating the final target information)

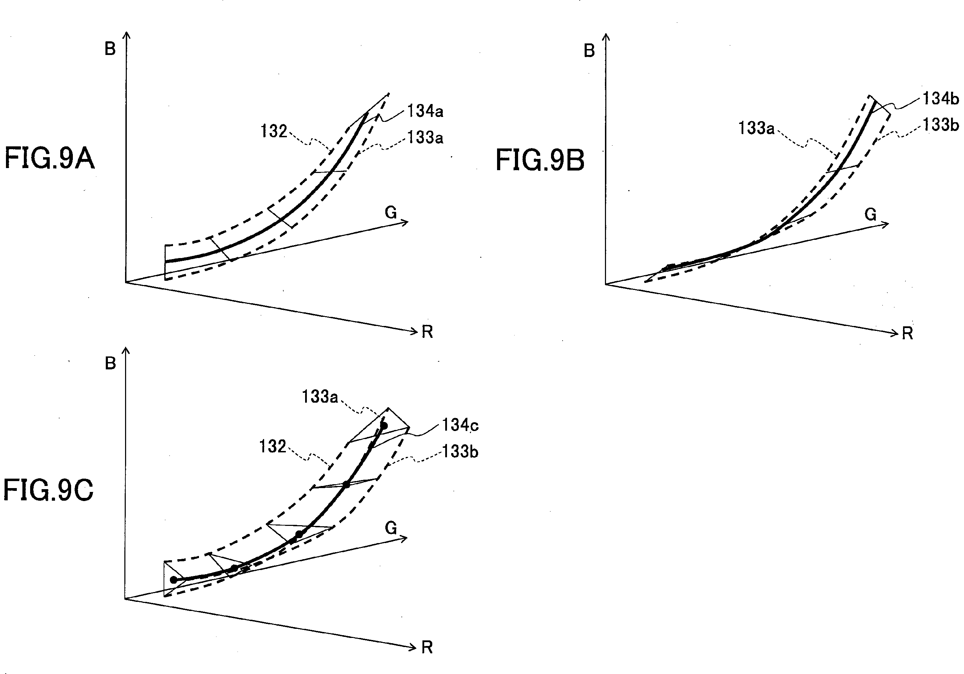

Figs. 9A to 9C are diagrams illustrating examples of calculation of the final target color information, which is used for generating the final conversion information by the final conversion unit 106.

The final conversion unit 106, based on the final conversion target, calculates the final tone function 134 as the final target color information, from the tone function 132 of the conversion region 122 in the input image data 121 and from the target tone function 133 of the selected target image data.

Fig. 9A illustrates the example of calculation of the final tone function 134a where the midpoint between the input image data 121 and the converted image data "A" 124a is specified for the final conversion target, as shown in Fig. 8A. In this case, the final conversion unit 106 obtains the final tone function 134a, by calculating an average of the tone function 132 of the input image data 121 and the target tone function 133a of the target image data "A", by using interpolation.

Fig. 9B illustrates the example of calculation of the final tone function 134b where the point, which is between the converted image data "A" 124a and the converted image data "B" 124b and is close to the converted image data "A" 124a, is specified for the final conversion target, as shown in Fig. 8B. Here, the ratio of the converted image data "A" 124a to the converted image data "B" 124b is assumed to be 3 to 1.

In this case, the final conversion unit 106 obtains the final tone function 134b by calculating a weighted average, multiplying the target tone function 133a of the target image data "A" by a weight coefficient of three fourths and multiplying the target tone function 133b of the target image data "B" by a weight coefficient of one fourth, by using interpolation.

Fig. 9C illustrates the example of calculation of the final tone function 134c where the center of the input image data 121, the converted image data "A" 124a and the converted image data "B" 124b is specified for the final conversion target, as shown in Fig. 8C.

In this case, the final conversion unit 106 obtains the final tone function 134c, by calculating an average of the tone function 132 of the input image data 121, the target tone function 133a of the target image data "A" and the target tone function 133b of the target image data "B", by using the interpolation.

The final conversion unit 106 generates a final conversion table, as the final conversion information, based on the final tone function 134, as obtained above. The generated final conversion table represents the relationship between the color component value of the tone function 132 and the color component value of the final tone function 134, which is converted from the tone function 132, as the conversion table illustrated in Figs. 6A to 6C.

The final conversion information may be, for example, not the final conversion table as above, but a conversion formula, with which the tone function 132 is converted to the final tone function 134. Moreover, the final conversion unit 106 also obtains the final tone function 134 in the same way as above for the case where the final conversion target is specified in the display and input unit 107 according to the "position specification" or the "numerical value specification".

(Second generation method for generating the final target information)

Next, an other generation method for generating the final target information by the final conversion unit 106 will be described in the following.

The final conversion unit 106 obtains the final conversion table by calculating a weighted average, by multiplying the linear conversion table with which the input image data 121 is output without any conversion and the conversion table to the target image data, by the weight coefficients obtained from the final conversion target.

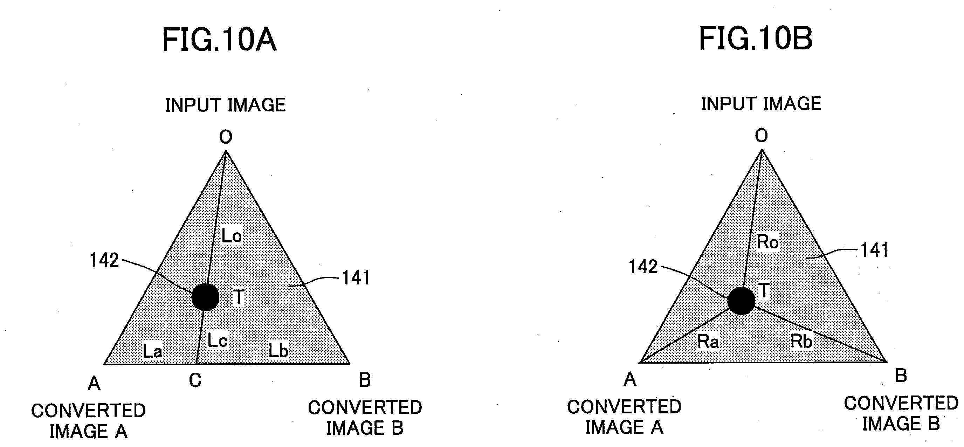

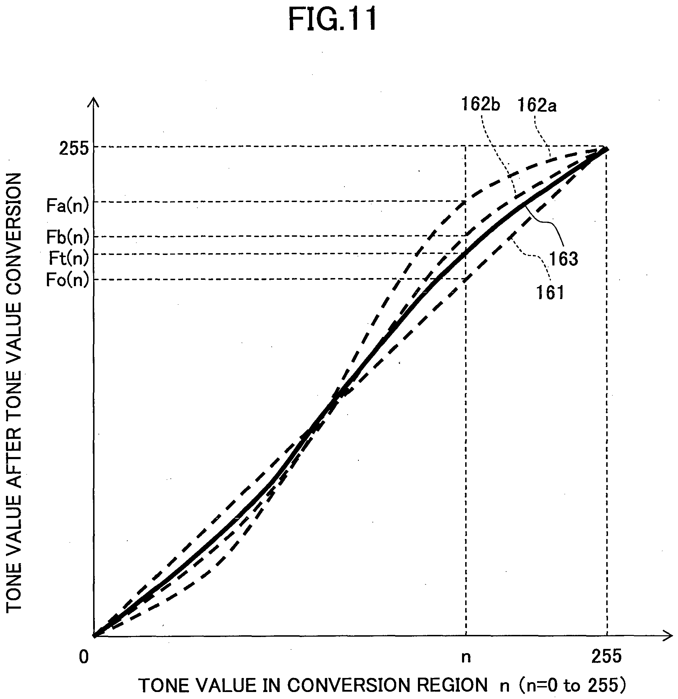

Figs. 10A and 10B are explanatory diagrams for explaining the weight coefficients used in the generation of the final conversion information. Moreover, Fig. 11 illustrates an example of the generation of the final conversion information by the final conversion unit 106.

Fig. 10A illustrates the example where the position 142 is specified for the final conversion target in the final target specification region 141 of the display and input unit 107. Here, in the final target specification region 141, points which represent the input image data 121, the converted image data "A" 124a and the converted image data "B" 124b, are denoted "O", "A", and "B", respectively. Furthermore, the specified position 142 in the final target specification region 141 is denoted "T". Moreover, a point, at which a line through the points "O" and "T" intersects with a line through the points "A" and "B", is denoted "C". Lengths of the line segments OT, TC, AC and BC are denoted Lo, Lc, La and Lb, respectively.

In this case, for example, a weight coefficient ko for the input image data 121 in the weighted average is $Lc/(Lo+Lc)$. Moreover, a weight coefficient ka for the converted image "A" 124a is $(LoLb)/(Lo+Lc)/(La+Lb)$, and a weight coefficient kb for the converted image "B" 124b is $(LoLa)/(Lo+Lc)/(La+Lb)$.

Moreover, Fig. 10B illustrates the example where the final conversion target is specified by inputting the numerical value to the display and input unit 107. When the numerical value input for the final conversion target is denoted "(input image data, converted image data "A", converted image data "B") is (Ro, Ra, Rb)", the ratios among the lengths of the line segments in Fig. 10, i.e. (OT, AT, BT) are the same as the ratios among the numerical values (Ro, Ra, Rb).

In this case, for example, a weight coefficient ko for the input image data 121 in the weighted average is $Ro/(Ro+Ra+Rb)$. Moreover, a weight coefficient ka for the converted image "A" 124a is $Ra/(Ro+Ra+Rb)$, and a weight coefficient kb for the converted image "B" 124b is $Rb/(Ro+Ra+Rb)$.

In the example of the generation of the final conversion information, as shown in Fig. 11, for a tone value "n" in the conversion, region 122, the tone value converted by the linear conversion table 161, the tone value converted by the conversion table 162a of the converted image data "A", and the tone value converted by the conversion table 162b of the converted image data "B", are denoted Fo(n), Fa(n) and Fb(n), respectively.

The final conversion unit 106 obtains final conversion information by calculating a final conversion table Ft(n) 163, with which the color tone conversion is performed for the conversion region 122 in the input image data 121, according to the following formula (1):

```
Formula (1)

Ft(n) = ko·Fo(n) + ka·Fa(n) + kb·Fb(n)
```

The final conversion unit 106 calculates the final conversion table for all the color components (for the RGB color system, the R, G and B color components), according to formula (1), as the final conversion information, which converts the conversion region 122.

The method of calculating the weight coefficient is not limited to the above description. The weight coefficient may be arbitrarily set according to the specified position in the final target specification region 141 input to the display and input unit 107 or according to the input numerical value for specification.

Moreover, the final conversion unit 106, in the operation described in the section of (First generation method for generating the final target information), by using the above weight coefficients, may calculate a weighted average of the tone function 132 and the target tone function 133, as the final tone function, and generate the conversion table based on the calculated final tone function.

<<Generate final image data>>

The final conversion unit 106 calculates the final conversion table as the final conversion information, and performs the color tone conversion for the conversion region in the input image data 121 based on the final conversion table, to generate the final image data.

Since the final conversion unit 106 performs the color tone conversion for the conversion region 122 based on the final conversion table, the color tone of the conversion region 122 can be adjusted to the color tone desired by the user who executes the image processing. The final conversion unit 106 may perform the color tone conversion for a region other than the conversion region 122 in the input image data 121, in the same way as for the conversion region 122.

The final image data 125, the color tone of which has been converted by the final conversion unit 106, is displayed on the display and input unit 107, as shown in Fig. 7 for example. The user who executes the image processing can verify the result of the image processing.

<Flow of image processing>

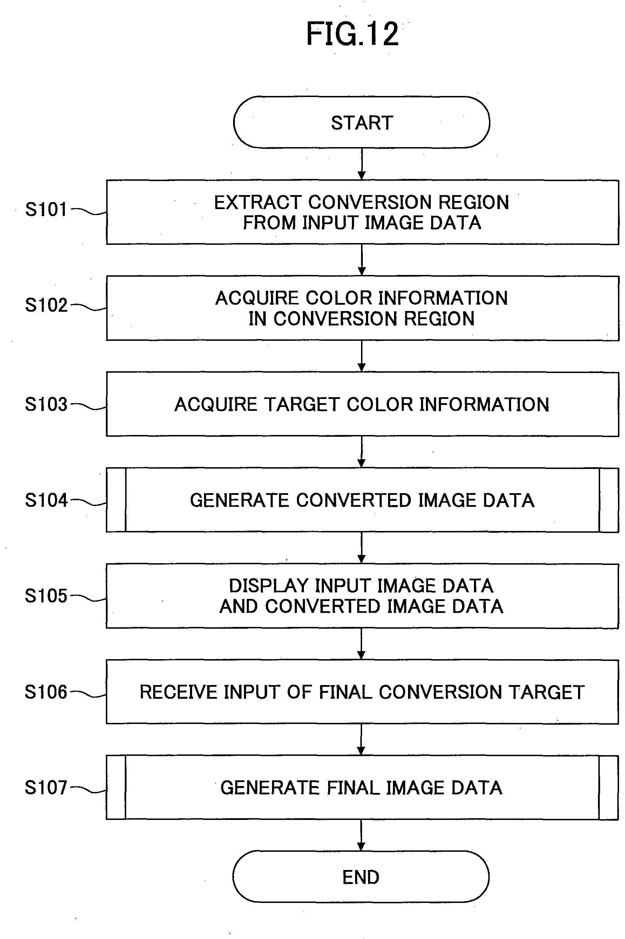

Fig. 12 is a flowchart illustrating an example of the image processing in the image processing apparatus according to the first embodiment.

When image data is input to the image processing apparatus 100, the region extraction unit 101 extracts a conversion region 122, in which color information is converted, from the input image data 121 (step S101). Next, the conversion unit 105 acquires a tone function 132 as the color information of the conversion region 122 (step S102).

Next, when the user, who executes the image processing, selects a target image data from a group of target image data 123 displayed on the display and input unit 107, the target color information acquisition unit 103 acquires a target tone function 133 corresponding to the target image data from a storage unit 104 (step S103).

The conversion unit 105 executes a conversion image data generation process, to generate a converted image data 124 from the input image data (step S104).

When the converted image data 124 is generated, the display and input unit 107 displays the input image data 121 and the converted image data 124 (step S105), and receives an input for a final conversion target (step S106).

When the final conversion target is input, the final conversion unit 106 executes a final image data generation process, to generate a final image data 125 (step S107). Then, the process ends.

(Conversion image data generation process)

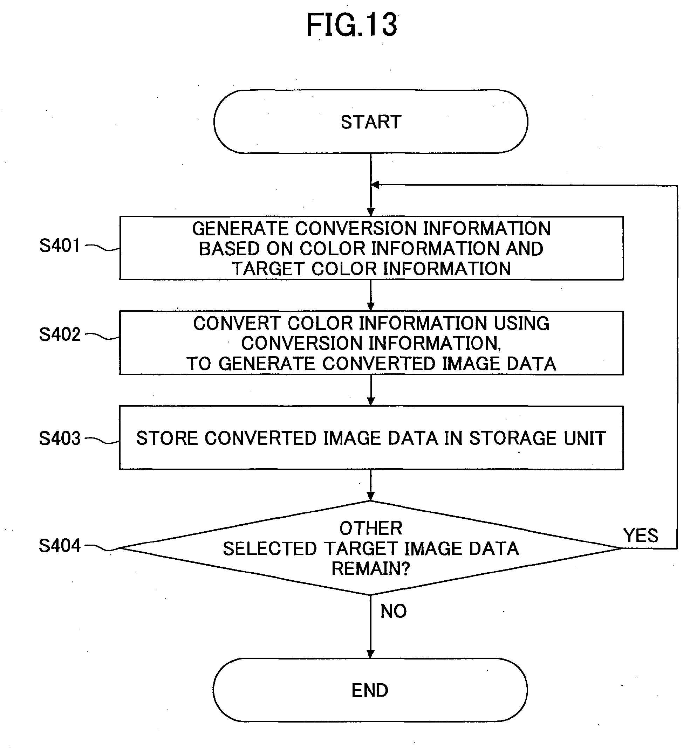

Fig. 13 is a flowchart illustrating the process of the conversion image data generation process, in which the conversion unit 105 converts the conversion region 122 in the input image data 121 and generates the converted image data 124.

The conversion unit 105 generates, as conversion information, a conversion table from a tone function 132 of the conversion region 122 and from a target tone function 133 of the target image data (step S401).

Next, the conversion unit 105, based on the conversion table, executes the color tone conversion for the conversion region 122 in the input image data 121 (step S402), generates a converted image data 124, and stores the generated converted image data 124 in a storage unit 104 (step S403).

The conversion unit 105 determines whether the target image data selected by the user, who executes the image processing, includes target image data which has not generated converted image data (step S404). The conversion unit 105 repeatedly executes the processes of steps S401 to S403, until converted image data 124 corresponding to all the target image data selected by the user are generated.

The conversion unit 105, according to the process as explained above, for each of the target image data selected by the user, who executes the image processing, generates conversion image data 124 corresponding to the target image data.

(First generation method of generating final image data)

Next, the final image data generation process by the final conversion unit 106 will be explained.

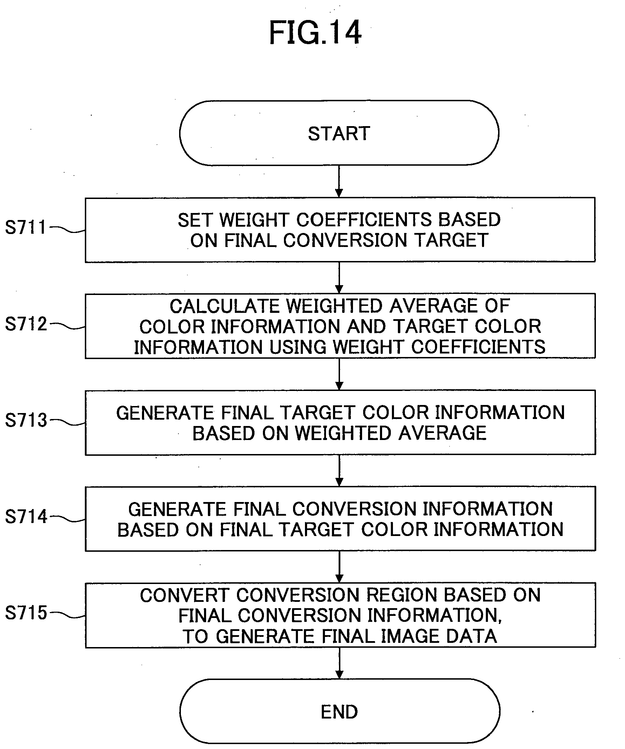

Fig. 14 is a flowchart illustrating an example of a process of generating a final image, in which the final conversion unit 106 converts the conversion region 122 of the input image data 121, and generates the final image data 125. Fig. 14, as explained in the section of (First generation method for generating the final target information), illustrates an example of a process that the final conversion unit 106 calculates the final tone function using a weight coefficient and generates the final image data 125 based on the final conversion table obtained from the final tone function.

The final conversion unit 106, sets a weight coefficient corresponding to the input image data and to the target image data, according to the final conversion target, input to the display and input unit 107 (step S711).

Next, the final conversion unit 106 calculates a weighted average of a tone function 132 of the conversion region 122 in the input image data 121 and a target tone function 133 of the target image data using the weight coefficients (step S712). The final conversion unit 106 generates a final tone function from the weighted average value (step S713).

The final conversion unit generates a final conversion table as the final conversion information from the final tone function (step S714). Next, the final conversion unit converts the conversion region 122 in the input image data 121 based on the final conversion table, and generates a final image data 125. Then, the process ends.

(Second generation method of generating final image data)

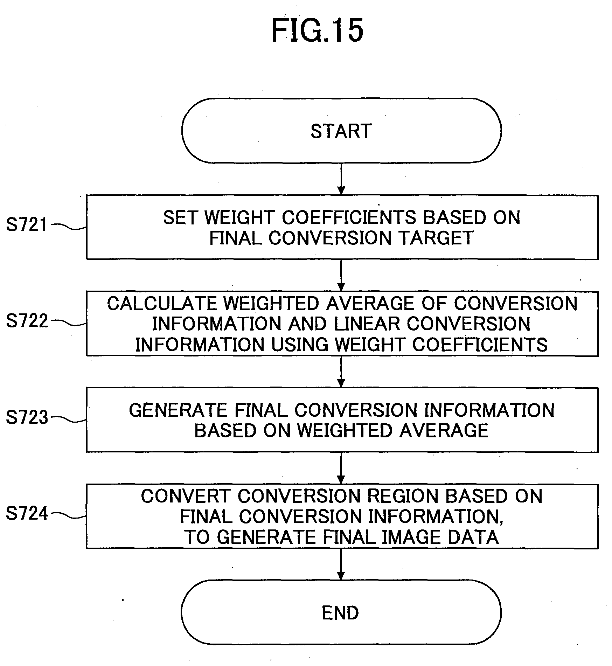

Fig. 15 is a flowchart illustrating an example of the final image data generation process, in which the final conversion unit 106 converts the conversion region 122 in the input image data 121 and generates the final image data 125. Fig. 15 is, as explained in the section of (Second generation method of generating final conversion information), illustrates the process, in which the final conversion unit 106 obtains the final conversion table 163 from the conversion table and from the linear conversion table, using the weight coefficients, and generates the final image data 125 based on the final generation table 163.

The final conversion unit 106 sets the weight coefficients for the input image data and for the target image data based on the final conversion target input to the display and input unit 107 (step S721).

Next, the final conversion unit 106, by using the weight coefficients, calculates a weighted average of a linear conversion table, with which the input image data 121 is output without any conversion, and the conversion table to the target image data (step S722). Next, the final conversion unit 106 generates the final conversion data as the final conversion information from the calculated weighted average (step S723).

Finally, the final conversion unit 106 converts the color tone of the conversion region 122 in the input image data 121 based on the final conversion data, and generates the final image data 125. Then, the process ends.

As described above, according to the image processing apparatus 100 according to the first embodiment, the user, who executes the image processing, can easily obtain a final image data 125 from the input image data 121, in which a color tone of a conversion region 122 is converted into the desired color tone. The user who executes the image processing can convert the color tone of the conversion region not only into the color tone of the prepared target image data in advance but also into an intermediate color tone between the conversion region and the target image data. The operation by the user, who executes image processing, is only selecting the target image data having a desired color tone and specifying the final conversion target by touching a desired position on a screen or inputting a numerical value. The above operation does not require deep knowledge or considerable experience in image processing, and the user can obtain a subjectively desirable image by an intuitive and simple operation.

The image processing apparatus 100 according to the first embodiment, as explained above, may be applied to various apparatuses which execute processes for image data, such as a complex copy machine, a printer, a facsimile machine, a scanner machine, a digital camera, or a personal computer (PC), by adding necessary functions.

Moreover, the functions, with which the image processing apparatus 1000 according to the first embodiment is equipped with, can be realized by executing in a computer the operating procedures, explained above, as a computer program, in which the operating procedures are coded in a programming language used in the image processing apparatus 1000. Accordingly, the program, which realizes the image processing apparatus 1000, can be stored in a recording medium 1108, readable by the computer.

Accordingly, the program according to the first embodiment, which can be stored in the recording medium 1108, such as a floppy disk (registered trademark), a CD (Compact Disc), or a DVD (Digital Versatile Disk), can be installed in the image processing apparatus 1000 from the recording medium 1108. Moreover, since the image processing apparatus 1000 includes the network I/F unit 1105, the program according to the first embodiment can be downloaded via a communication line, such as the Internet, and installed.

[Second embodiment]

Next, the image processing system according to the second embodiment will be described with reference to the accompanying drawings. Meanwhile, the same reference numerals are assigned to the members which have substantially the same functions or configuration as the image processing apparatus 1000 according to the first embodiment. The duplicate explanations will be omitted.

Moreover, in the following embodiment, as an image input apparatus receiving an input of image data, a complex machine having a print function, a scanner function, a copy function or a facsimile function in a chassis, is exemplified. The present embodiment is not limited to this. For the image input apparatus, as long as image data can be input, any of a scanner machine, a facsimile machine or a copy machine may be used.

<Configuration of image processing system>

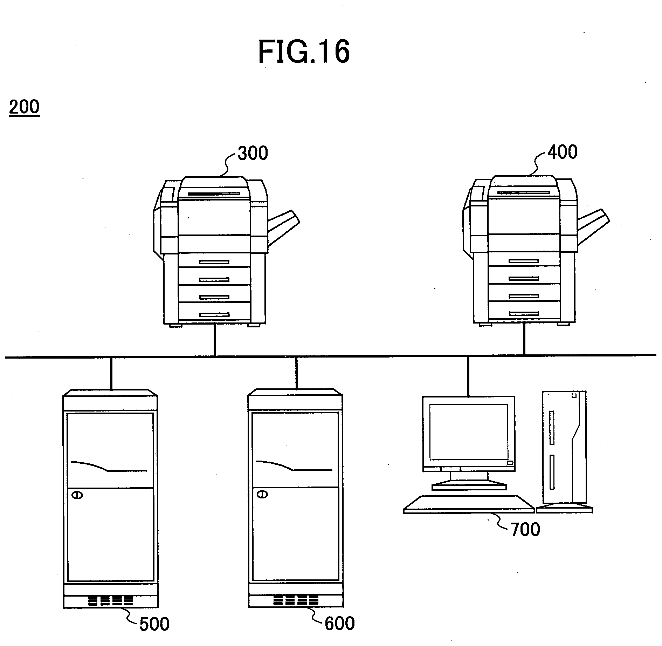

Fig. 16 is a diagram illustrating an example of a configuration of the image processing system according to the second embodiment. As shown in Fig. 16, the image processing system 200 includes MFPs (Multifunction Peripherals) 300, 400, image processing servers 500, 600 as the image processing apparatuses, and an information processing terminal 700 such as a PC (Personal Computer). The above components are connected via a network.

In the image processing system 200 according to the second embodiment, the numbers of the MFPs, the image processing servers, and the information processing terminals are not limited and may be arbitrary numbers. In the following, the MFP 300 and the image processing server 500 will be explained. A explanation for the MFP 400 and the image processing server 600, which have the same configurations as the MFP 300 and the image processing server 600 respectively, will be omitted.

The MFP 300 is a complex machine, which has a scanner function for reading out an image, a copy function, a printer function, a facsimile function and the like in a chassis. The MFP 300 scans a paper medium or the like by using the scanner function, generates image data, and transmits the generated image data to the image processing server 500. Details of the MFP 300 will be described later.

The image processing server 500 is an image processing apparatus, which performs image processing for an image read out by the MFP 300, 400 or image data acquired via a network. The information processing terminal 700 may be equipped with the function of image processing, which the image processing server 500 has.

<Hardware configuration of MFP>

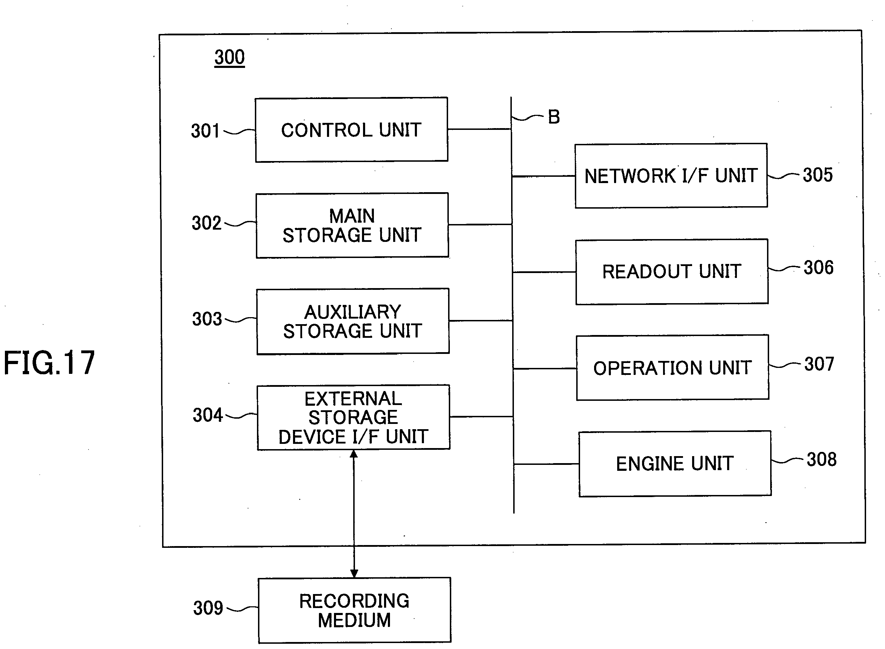

Fig. 17 is a diagram illustrating an example of a hardware configuration of the MFP 300.

As shown in Fig. 17, the MFP 300 includes a control unit 301, a main storage unit 302, an auxiliary storage unit 33, an external storage device I/F unit 304, a network I/F unit 305, a readout unit 306, an operation unit 307, and an engine unit 308.

The control unit 301 is a CPU, which controls each unit in the apparatus, and computes or processes data. Moreover, the control unit 301 is a processing unit that executes a program stored in the main storage unit 302. The control unit 301 receives data from an input device or a storage device, calculates or processes the data, and outputs the data to an output device or the storage device.

The main storage unit 302 is a ROM (Read-Only Memory), a RAM (Random Access Memory), or the like. The main storage unit 302 stores or temporarily saves a program, such as an OS as a basic system or an application software executed at the control unit 301, or data.

The auxiliary storage unit 303 is a HDD or the like. The auxiliary storage unit 303 stores data related to the application software or the like.

The external storage device I/F unit 304 is an interface between a recording medium 309, such as a flash memory, connected via a data transmission path, such as a USB (Universal Serial Bus) and the MFP 300.

Moreover, the program stored in the recording medium 309 is installed via the external storage device I/F unit 304, and becomes executable by the MFP 300.

The network I/F unit 305 is an interface between a peripheral device having a communication device connected via a network such as a LAN (Local Area Network) or a WAN (Wide Area Network), which are configured by a data communication path of a wireless and/or wired line and the MFP 300.

The readout unit 306 is a scanner device, which scans a paper medium, to read out an image, and acquires image data from the image.

The operation unit 307 includes a key switch (hardware key) and an LCD (Liquid Crystal Display), equipped with a touch panel function (including a software key in a GUI (Graphical User Interface)). The operation unit 307 is a display device and/or an input device, i.e. the operation unit 307 functions as a UI (User Interface) for using the functions, with which the MFP 300 is equipped.

The engine unit 308 is a mechanical part, such as a plotter, which performs a process of forming an image on a paper medium or the like.

<Hardware configuration of image processing server>

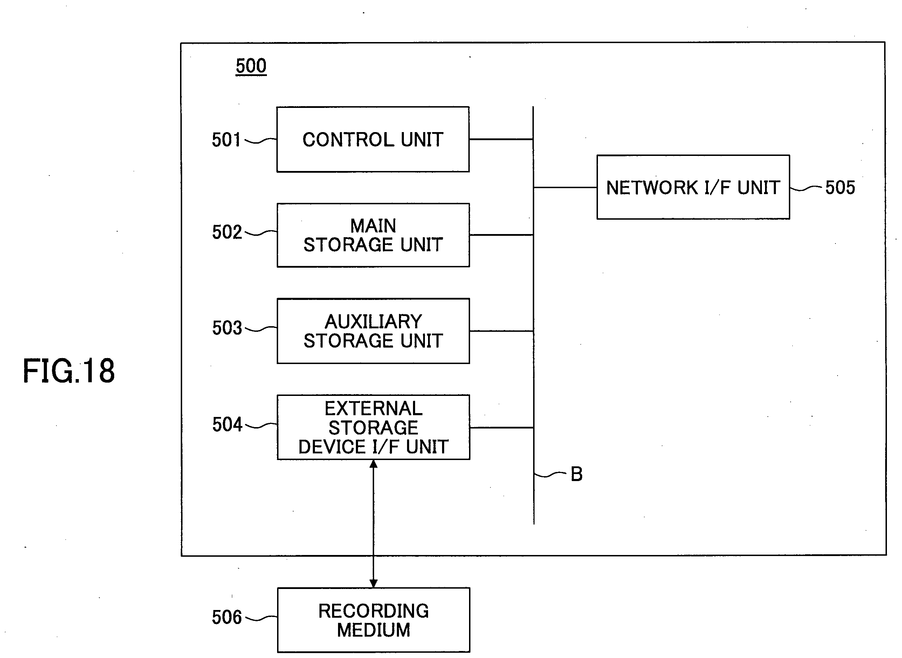

Fig. 18 is a diagram illustrating an example of a hardware configuration of the image processing server 500.

As shown in Fig. 18, the image processing server 500 includes a control unit 501, a main storage unit 502, an auxiliary storage unit 503, an external storage device I/F unit 504 and a network I/F unit 505.

The control unit 501 is a CPU, which controls each unit in the apparatus, and computes or processes data. Moreover, the control unit 501 is a processing unit that executes a program stored in the main storage unit 502. The control unit 501 receives data from an input device or a storage device, calculates or processes the data, and outputs the data to an output device or the storage device.

The main storage unit 502 is a ROM (Read-Only Memory), a RAM (Random Access Memory), or the like. The main storage unit 502 stores or temporarily saves a program, such as an OS as a basic system or an application software executed at the control unit 501, or data.

The auxiliary storage unit 503 is a HDD or the like. The auxiliary storage unit 503 stores data related to the application software or the like.

The external storage device I/F unit 504 is an interface between a recording medium 506, such as a flash memory, connected via a data transmission path, such as a USB (Universal Serial Bus) and the image processing server 500.

Moreover, the program stored in the recording medium 506 is installed via the external storage device I/F unit 504, and becomes executable by the image processing server 500.

The network I/F unit 505 is an interface between a peripheral device having a communication device connected via a network such as a LAN (Local Area Network) or a WAN (Wide Area Network), which are configured by a data communication path of a wireless and/or wired line and the image processing server 500. Moreover, the image processing server may include an operation unit having a keyboard or the like, and a display unit having an LCD or the like, though the operation unit and the display unit are not shown in Fig. 18.

A hardware configuration of the information processing terminal 700 is the same as the image processing apparatus according to the first embodiment, as shown in Fig. 1.

<Functional configuration of image processing system>

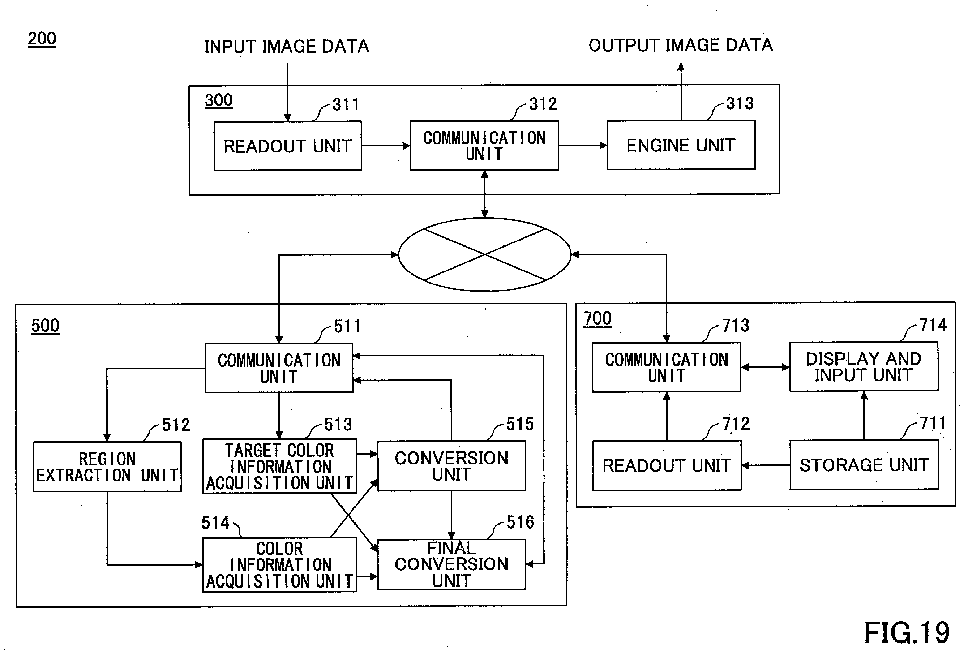

Fig. 19 is a diagram illustrating an example of a functional configuration of the image processing system 200 according to the second embodiment.

As shown in Fig. 19, the MFP 300 includes the readout unit 311, a communication unit 312 and an engine unit 313.

The readout unit 311 can acquire image data, for which an image processing is performed, by scanning a paper medium.

The communication unit 312 can receive image data stored in a storage unit 711 of the information processing terminal 700. Moreover, the communication unit 312 can transmit the image data acquired by the readout unit 311 to the image processing server as an image processing apparatus, and can receive the image data, for which the image processing server 500 performs the image processing.

The engine unit 313 can print the image data, for which the image processing server 500 performed the image processing, on a recording medium, such as a paper medium, and thereby output the image data. Moreover, the engine unit can print the image data, for which the image processing server 500 performed an image conversion, on a recording medium, and output the image data.

The information processing terminal 700 includes a storage unit 711, a readout unit 712, a communication unit 713 and a display and input unit 714.

The storage unit 711 stores image data group 123 to be selected as a target, and plural target tone functions 133 as target color information corresponding to the image data group 123.

The readout unit 712 reads out the target image data group 123 and a target tone function 133 corresponding to target image data selected by the user who executes the image processing from the storage unit 711.

The communication unit 713 transmits the target image data group 123 and the target tone function 133 read out by the readout unit from the storage unit 711 to the MFP or the information processing server 500. Moreover, the communication unit receives input image data 121, final image data 125, or the like, transmitted from the MFP 500 or from the image processing server 500.

On the display and input unit 714, the input image data 121 and the final image data 125, received by the communication unit 713, the target image data group 123 stored in the storage unit 711, or the like, are displayed.

Meanwhile, either the MFP 300 or the image processing server 500 may be provided with at least one of the functions, with which the information processing terminal 700 is equipped.

The image processing server 500 includes a communication unit 511, a region extraction unit 512, a target color information acquisition unit 513, a color information acquisition unit 514, a conversion unit 515, and a final conversion unit 516. A function of each unit is the same as the function of the corresponding unit in the image processing apparatus 100 according to the first embodiment. Meanwhile, either the MFP 300 or the information processing terminal 700 may be equipped with at least one of the functions, with which the information processing server 500 is equipped.

In the image processing system according to the second embodiment, the user, who executes the image processing, acquires an image including a conversion region for which the image processing is performed, as image data by the readout unit 311, and further acquires final image data 125 for which the image conversion processing was performed by the image processing server 500. The user, who executes the image processing, may read out image data including the conversion region for which the image processing is performed, from the information processing terminal 700, and may perform the image conversion processing for the image data by the image processing server 500.

In the image processing server 500, the region extraction unit 512 extracts the conversion region 122, and the color information acquisition unit 514 acquires a tone function, as color information for the conversion region 122. Moreover, the target color information acquisition unit 513 acquires a target tone function, as target color information acquired from the information processing terminal 700 via the communication unit 511. The conversion unit 515 generates converted image data 124 based on the target tone function, and transmits the converted image data 124 to the information processing terminal 700 via the communication unit 511.

In the information processing terminal 700, on the display and input unit 714 the input image data 121 and the converted image data 124 are displayed. The user, who executes the image processing, inputs a final conversion target. The final conversion target is transmitted to the image processing server 500 by the communication unit 713.

In the image processing server 500, the final conversion unit 516 obtains a final conversion table based on the final conversion target, and generates the final image data 125 based on the final conversion table. The final image data 125 are transmitted to the information processing terminal 700 by the communication unit 511 and are displayed on the display and input unit 714. The final image data 125 may be transmitted to the MFP 300, and are printed on a recording paper by the engine unit 313. According to the above operations, the user, who executed the image processing, can obtain an image output having the desired color tone.

As described above, in the image processing system 200 according to the second embodiment, the user, who executes the image processing, can perform a color tone conversion process, from the information processing terminal 700 with a simple operation, for the conversion region 122 in the input image data 121, acquired by the MFP 300 or the like, and obtain the final image data.

The image processing apparatus, the image processing system, the image processing method, the program thereof and a recording medium storing the program according to the embodiments are described as above. The present invention is not limited to these embodiments, but various variations and modifications may be made without departing from the scope of the present invention.

The present application is based on and claims the benefit of priority of Japanese Priority Application No. 2013-042608 filed on March 5, 2013, with the Japanese Patent Office.

**Description of the Reference Numerals**

100, 1000 image processing apparatus
101, 512 region extraction unit
102, 514 color information acquisition unit
103, 513 target color information acquisition unit
104, 711 storage unit
105, 515 conversion unit
106, 516 final conversion unit
107, 714 display and input unit
121 input image data
122 conversion region
123 target image data group
124a converted image data "A"

124b converted image data "B"
125 final image data
131 color component
132 tone function
133, 133a, 133b target tone function
141 final target specification region
142 specified position
134a, 134b, 134c final tone function
161 linear conversion table
162a conversion table of converted image data "A"
162b conversion table of converted image data "B"
163 final conversion table
200 image processing system
300, 400 MFP
301, 501, 1101 control unit
302, 502, 1102 main storage unit
303, 503, 1103 auxiliary storage unit
304, 504, 1104 external storage device I/F unit
305, 505, 1105 network I/F unit
306, 311, 712 readout unit
307, 1107 operation unit
308, 313 engine unit
309, 506, 1108 recording medium
312, 511, 713 communication unit
500, 600 image processing server
700 information processing terminal
1106 display unit

## Claims

1. An image processing apparatus (100) comprising:

   a region extraction unit (101) configured to extract a conversion region (122) from input image data (121), the conversion region (122) being a region of human skin in the input image data (121);
   a color information acquisition unit (102) configured to acquire color components (131) of pixels included in the conversion region (122) and to calculate a three-dimensional tone function (132) from the color components as color information, wherein the tone function (132) is an approximation function obtained by using a regression analysis so that distances to data groups of pixels of the color components (131) are minimum, and illustratable as a solid curve in a three-dimensional graph;
   a target color information acquisition unit (103) configured to acquire a target function having the same data format as the tone function, as target color information, which is a target of conversion for the color information, wherein the target color information acquisition unit is configured to acquire at least first target color information and second target color information;
   a conversion unit (105) configured to: generate first conversion information based on the color information and the first target color information, generate second conversion information based on the color information and the second target color information,
   convert the input image data based on the first conversion information to generate first converted image data (A), and
   convert the input image data based on the second conversion information to generate second converted image data (B);
   a display and input unit (107) configured to display the input image data (121) and the first and second converted image data (A; B), and to receive an input of a final conversion target, which is a final target of conversion for the color information; and
   a final conversion unit (106) configured to generate final conversion information based on the final conversion target, and to convert the input image data based on the final conversion information, to generate final image data (125).

15

**2.** The image processing apparatus (100) as claimed in claim 1, wherein

the display and input unit (107) is further configured to display a polygon, which connects a point representing the input image data (121), a point representing the first converted image data (A), and a point representing the second converted image data (B), and receives an input of a target position on the polygon as the final conversion target, and
the final conversion unit (106) is further configured to generate the final conversion information using weight coefficients, which are derived from a positional relationship among the points and the target position.

**3.** The image processing apparatus (100) as claimed in claim 1, wherein

the display and input unit (107) is further configured to receive an input of a ratio between the input image data (121), the first converted image data (A) and the second converted image data (B) as the final conversion target, and
the final conversion unit (106) is further configured to generate the final conversion information using weight coefficients, which are derived from the ratio.

**4.** The image processing apparatus (100) as claimed in claim 2 or 3, wherein
the final conversion unit (106) is further configured to calculate a weighted average of the color information and the target color information using the weight coefficients, to obtain final target color information, and to generate the final conversion information based on the final target color information.

**5.** The image processing apparatus (100) as claimed in claim 2 or 3, wherein
the final conversion unit (106) is further configured to calculate a weighted average of the conversion information and linear conversion information using the weight coefficients, to generate the final conversion information, the linear conversion information being generated without converting the color information.

**6.** The image processing apparatus (100) as claimed in any one of claims 1 to 5, wherein
the final conversion unit (106) is further configured to convert color information in a region other than the conversion region (122) in the input image data (121) in the same way as for the conversion region based on the final conversion information, to generate the final image data (125).

**7.** An image processing system (200) comprising an image processing apparatus (500) and an information processing terminal (700), which are connected with each other via a network, wherein
the image processing apparatus (500) includes:

a region extraction unit (512) configured to extract a conversion region (122) from input image data (121), the conversion region being a region of human skin in the input image data (121);
a color information acquisition unit (514) configured to acquire color components (131) of pixels included in the conversion region (122) and to calculate a three-dimensional tone function (132) from the color components as color information, wherein the tone function (132) is an approximation function obtained by using a regression analysis so that distances to data groups of pixels of the color components (131) are minimum, and illustratable as a solid curve in a three-dimensional graph;
a target color information acquisition unit (513) configured to acquire a target tone function having the same data format as the tone function, as target color information, which is a target of conversion for the color information, wherein the target color information acquisition unit is configured to acquire at least first target color information and second target color information;
a conversion unit (515) configured to: generate first conversion information based on the color information and the first target color information, generate second conversion information based on the color information and the second target color information,
convert the input image data based on the first conversion information to generate first converted image data (A), and
convert the input image data based on the second conversion information to generate second converted image data (B); and
a final conversion unit (516) configured to generate final conversion information based on an input final conversion target, which is a final target of conversion for the color information, and to convert the input image data based on the final conversion information, to generate final image data (125), and
the information processing terminal (700) includes a display and input unit (714) configured to display the input image data (121) and the first and second converted image data (A; B), and to receive an input of the final conversion target.

8. An image processing method comprising:

a region extraction step of extracting a conversion region (122) from input image data (121), the conversion region being a region of human skin in the input image data (121);

a color information acquisition step of acquiring color components (131) of pixels included in the conversion region (122) and calculating a three-dimensional tone function (132) from the color components as color information, wherein the tone function (132) is an approximation function obtained by using a regression analysis so that distances to data groups of pixels of the color components (131) are minimum, and illustratable as a solid curve in a three-dimensional graph;

a target color information acquisition step of acquiring a target function having the same data format as the tone function, as target color information, which is a target of conversion for the color information, wherein the target color information includes first target color information and second target color information;

a conversion step of generating first conversion information based on the color information and the first target color information and generating second conversion information based on the color information and the second target color information, and converting the input image data based on the first conversion information to generate first converted image data (A) and converting the input image data based on the second conversion information to generate second converted image data (B);

a display input step of displaying the input image data (121) and the first and second converted image data (A; B), and receiving an input of a final conversion target, which is a final target of conversion for the color information; and

a final conversion step of generating final conversion information based on the final conversion target, and converting the input image data based on the final conversion information, to generate final image data (125).

**Patentansprüche**

1. Bildverarbeitungsvorrichtung (100), die Folgendes umfasst:

eine Bereichsextraktionseinheit (101), die konfiguriert ist, einen Umsetzungsbereich (122) aus Eingangsbilddaten (121) zu extrahieren, wobei der Umsetzungsbereich (122) ein Bereich menschlicher Haut in den Eingangsbilddaten (121) ist;

eine Farbinformationserfassungseinheit (102), die konfiguriert ist, Farbkomponenten (131) von Pixeln, die in dem Umsetzungsbereich (122) enthalten sind, zu erfassen und eine dreidimensionale Tonfunktion (132) aus den Farbkomponenten als Farbinformationen zu berechnen, wobei die Tonfunktion (132) eine Approximationsfunktion ist, die durch Verwenden einer Regressionsanalyse erhalten wird, so dass Abstände zu Datengruppen von Pixeln der Farbkomponenten (131) minimal sind, und die als eine durchgezogene Linie in einem dreidimensionalen Graphen darstellbar ist;

eine Zielfarbinformationserfassungseinheit (103), die konfiguriert ist, eine Zielfunktion mit demselben Datenformat wie die Tonfunktion als Zielfarbinformationen zu erfassen, die ein Ziel einer Umsetzung für die Farbinformationen sind,

wobei die Zielfarbinformationserfassungseinheit konfiguriert ist, zumindest erste Zielfarbinformationen und zweite Zielfarbinformationen zu erfassen;

eine Umsetzungseinheit (105), die konfiguriert ist zum: Erzeugen erster Umsetzungsinformationen anhand der Farbinformationen und der ersten Zielfarbinformationen, Erzeugen zweiter Umsetzungsinformationen anhand der Farbinformationen und der zweiten Zielfarbinformationen, Umsetzen der Eingangsbilddaten anhand der ersten Umsetzungsinformationen, um erste umgesetzte Bilddaten (A) zu erzeugen, und Umsetzen der Eingangsbilddaten anhand der zweiten Umsetzungsinformationen, um zweite umgesetzte Bilddaten (B) zu erzeugen;

eine Anzeige- und Eingabeeinheit (107), die konfiguriert ist, die Eingangsbilddaten (121) und die ersten und die zweiten umgesetzten Bilddaten (A; B) anzuzeigen und eine Eingabe eines Endumsetzungsziels zu empfangen, das ein Endziel der Umsetzung für die Farbinformationen ist; und

eine Endumsetzungseinheit (106), die konfiguriert ist, Endumsetzungsinformationen anhand des Endumsetzungsziels zu erzeugen und die Eingangsbilddaten anhand der Endumsetzungsinformationen umzusetzen, um Endbilddaten (125) zu erzeugen.

**2.** Bildverarbeitungsvorrichtung (100) nach Anspruch 1, wobei
die Anzeige- und Eingabeeinheit (107) ferner konfiguriert ist, ein Polygon anzuzeigen, das einen Punkt, der die Eingangsbilddaten (121) repräsentiert, einen Punkt, der die ersten umgesetzten Bilddaten (A) repräsentiert, und einen Punkt, der die zweiten umgesetzten Bilddaten (B) repräsentiert, verbindet, und eine Eingabe einer Zielposition auf dem Polygon als das Endumsetzungsziel zu empfangen, und
die Endumsetzungseinheit (106) ferner konfiguriert ist, die Endumsetzungsinformationen unter Verwendung von Gewichtungskoeffizienten zu erzeugen, die von einer Positionsbeziehung unter den Punkten und der Zielposition abgeleitet sind.

**3.** Bildverarbeitungsvorrichtung (100) nach Anspruch 1, wobei
die Anzeige- und Eingabeeinheit (107) ferner konfiguriert ist, eine Eingabe eines Verhältnisse zwischen den Eingangsbilddaten (121), den ersten umgesetzten Bilddaten (A) und den zweiten umgesetzten Bilddaten (B) als das Endumsetzungsziel zu empfangen, und
die Endumsetzungseinheit (106) ferner konfiguriert ist, die Endumsetzungsinformationen unter Verwendung von Gewichtungskoeffizienten zu erzeugen, die von dem Verhältnis abgeleitet sind.

**4.** Bildverarbeitungsvorrichtung (100) nach Anspruch 2 oder 3, wobei
die Endumsetzungseinheit (106) ferner konfiguriert ist, einen gewichteten Mittelwert der Farbinformationen und der Zielfarbinformationen unter Verwendung der Gewichtungskoeffizienten zu berechnen, um endgültige Zielfarbinformationen zu erhalten und die Endumsetzungsinformationen anhand der endgültigen Zielfarbinformationen zu erzeugen.

**5.** Bildverarbeitungsvorrichtung (100) nach Anspruch 2 oder 3, wobei
die Endumsetzungseinheit (106) ferner konfiguriert ist, einen gewichteten Mittelwert der Umsetzungsinformationen und lineare Umsetzungsinformationen unter Verwendung der Gewichtungskoeffizienten zu berechnen, um die Endumsetzungsinformationen zu erzeugen, wobei die linearen Umsetzungsinformationen ohne Umsetzen der Farbinformationen erzeugt werden.

**6.** Bildverarbeitungsvorrichtung (100) nach einem der Ansprüche 1 bis 5, wobei
die Endumsetzungseinheit (106) ferner konfiguriert ist, Farbinformationen in einem von dem Umsetzungsbereich (122) verschiedenen Bereich in den Eingangsbilddaten (121) in derselben Weise wie für den Umsetzungsbereich anhand der Endumsetzungsinformationen umzusetzen, um die Endbilddaten (125) zu erzeugen.

**7.** Bildverarbeitungssystem (200), das eine Bildverarbeitungsvorrichtung (500) und ein Datenverarbeitungsendgerät (700) umfasst, die miteinander über ein Netz verbunden sind, wobei
die Bildverarbeitungsvorrichtung (500) Folgendes enthält:

eine Bereichsextraktionseinheit (512), die konfiguriert ist, einen Umsetzungsbereich (122) aus Eingangsbilddaten (121) zu extrahieren, wobei der Umsetzungsbereich (122) ein Bereich menschlicher Haut in den Eingangsbilddaten (121) ist;
eine Farbinformationserfassungseinheit (514), die konfiguriert ist, Farbkomponenten (131) von Pixeln, die in dem Umsetzungsbereich (122) enthalten sind, zu erfassen und eine dreidimensionale Tonfunktion (132) aus den Farbkomponenten als Farbinformationen zu berechnen, wobei die Tonfunktion (132) eine Approximationsfunktion ist, die durch Verwenden einer Regressionsanalyse erhalten wird, so dass Abstände zu Datengruppen von Pixeln der Farbkomponenten (131) minimal sind, und die als eine durchgezogene Linie in einem dreidimensionalen Graphen darstellbar ist;
eine Zielfarbinformationserfassungseinheit (513), die konfiguriert ist, eine Zieltonfunktion mit demselben Datenformat wie die Tonfunktion als Zielfarbinformationen zu erfassen, die ein Ziel einer Umsetzung für die Farbinformationen sind,
wobei die Zielfarbinformationserfassungseinheit konfiguriert ist, zumindest erste Zielfarbinformationen und zweite Zielfarbinformationen zu erfassen;
eine Umsetzungseinheit (515), die konfiguriert ist zum: Erzeugen erster Umsetzungsinformationen anhand der Farbinformationen und der ersten Zielfarbinformationen, Erzeugen zweiter Umsetzungsinformationen anhand der Farbinformationen und der zweiten Zielfarbinformationen, Umsetzen der Eingangsbilddaten anhand der ersten Umsetzungsinformationen, um erste umgesetzte Bilddaten (A) zu erzeugen, und Umsetzen der Eingangsbilddaten anhand der zweiten Umsetzungsinformationen, um zweite umgesetzte Bilddaten (B) zu erzeugen;
eine Endumsetzungseinheit (516), die konfiguriert ist, Endumsetzungsinformationen anhand eines eingegebenen Endumsetzungsziels zu erzeugen, das ein Endziel der Umsetzung für die Farbinformationen ist, und die Eingangsbilddaten anhand der Endumsetzungsinformationen umzusetzen, um Endbilddaten (125) zu erzeugen, und

das Datenverarbeitungsendgerät (700) eine Anzeige- und Eingabeeinheit (714) enthält, die konfiguriert ist, die Eingangsbilddaten (121) und die ersten und die zweiten umgesetzten Bilddaten (A; B) anzuzeigen und eine Eingabe des Endumsetzungsziels zu empfangen.

8. Bildverarbeitungsverfahren, das Folgendes umfasst:

einen Bereichsextraktionsschritt des Extrahierens eines Umsetzungsbereichs (122) aus Eingangsbilddaten (121), wobei der Umsetzungsbereich (122) ein Bereich menschlicher Haut in den Eingangsbilddaten (121) ist;
einen Farbinformationserfassungsschritt des Erfassens von Farbkomponenten (131) von Pixeln, die in dem Umsetzungsbereich (122) enthalten sind, und Berechnens einer dreidimensionalen Tonfunktion (132) aus den Farbkomponenten als Farbinformationen, wobei die Tonfunktion (132) eine Approximationsfunktion ist, die durch Verwenden einer Regressionsanalyse erhalten wird, so dass Abstände zu Datengruppen von Pixeln der Farbkomponenten (131) minimal sind, und die als eine durchgezogene Linie in einem dreidimensionalen Graphen darstellbar ist;
einen Zielfarbinformationserfassungsschritt des Erfassens einer Zielfunktion mit demselben Datenformat wie die Tonfunktion als Zielfarbinformationen, die ein Ziel einer Umsetzung für die Farbinformationen sind, wobei die Zielfarbinformationen erste Zielfarbinformationen und zweite Zielfarbinformationen enthalten;
einen Umsetzungsschritt des Erzeugens erster Umsetzungsinformationen anhand der Farbinformationen und der ersten Zielfarbinformationen und des Erzeugens zweiter Umsetzungsinformationen anhand der Farbinformationen und der zweiten Zielfarbinformationen und des Umsetzens der Eingangsbilddaten anhand der ersten Umsetzungsinformationen, um erste umgesetzte Bilddaten (A) zu erzeugen, und des Umsetzens der Eingangsbilddaten anhand der zweiten Umsetzungsinformationen, um zweite umgesetzte Bilddaten (B) zu erzeugen;
einen Anzeigeeingabeschritt des Anzeigens der Eingangsbilddaten (121) und der ersten und der zweiten umgesetzten Bilddaten (A; B) und des Empfangens einer Eingabe eines Endumsetzungsziels, das ein Endziel der Umsetzung für die Farbinformationen ist; und
einen Endumsetzungsschritt des Erzeugens von Endumsetzungsinformationen anhand des Endumsetzungsziels und des Umsetzens der Eingangsbilddaten anhand der Endumsetzungsinformationen, um Endbilddaten (125) zu erzeugen.

**Revendications**

1. Appareil de traitement d'image (100) comprenant :

une unité d'extraction de région (101) conçue pour extraire une région de conversion (122) de données image d'entrée (121), la région de conversion (122) étant une région de peau humaine dans les données image d'entrée (121) ;
une unité d'acquisition d'informations de couleur (102) conçue pour acquérir des composantes de couleur (131) de pixels comprises dans la région de conversion (122) et pour calculer une fonction de tonalité en trois dimensions (132) à partir des composantes de couleur en tant qu'informations de couleur, la fonction de tonalité (132) étant une fonction d'approximation obtenue au moyen d'une analyse de régression de manière que des distances à des groupes de données de pixels des composantes de couleur (131) sont minimales, et pouvant être illustrées sous forme de courbe pleine dans un graphique en trois dimensions ;
une unité d'acquisition d'informations de couleur cible (103) conçue pour acquérir une fonction cible présentant le même format de données que la fonction de tonalité, en tant qu'informations de couleur, qui est une cible de conversion pour les informations de couleur,
l'unité d'acquisition d'informations de couleur cible étant conçue pour acquérir au moins des premières informations de couleur cible et des deuxièmes informations de couleur cible ;
une unité de conversion (105) conçue pour : générer des premières informations de conversion en fonction des informations de couleur et des premières informations de couleur cible, générer des deuxièmes informations de conversion en fonction des informations de couleur et des deuxièmes informations de couleur cible, convertir les données image d'entrée en fonction des premières informations de conversion pour générer des premières données image converties (A), et
convertir les données image d'entrée en fonction des deuxièmes informations de conversion pour générer des deuxièmes données image converties (B) ;

une unité d'affichage et d'entrée (107) conçue pour afficher les données image d'entrée (121) et les première et deuxième données image converties (A ; B) et pour recevoir une entrée d'une cible de conversion finale, qui est une cible finale de conversion pour les informations de couleur, et

une unité de conversion finale (106) conçue pour générer des informations de conversion finale en fonction d'une cible de conversion finale, et pour convertir les données image d'entrée en fonction des informations de conversion finale, pour générer des données image finales (125).

**2.** Appareil de traitement d'image (100) tel que défini dans la revendication 1, dans lequel :

l'unité d'affichage et d'entrée (107) est en outre conçue pour afficher un polygone, qui relie un point représentant les données image d'entrée (121), un point représentant les premières données image converties (A) et un point représentant les deuxièmes données image converties (B) et reçoit une entrée d'une position cible sur le polygone en tant que cible de conversion finale, et

l'unité de conversion finale (106) est en outre conçue pour générer les informations de conversion finale à l'aide de coefficients de pondération, qui sont dérivés d'un rapport de position parmi les points et la position cible.

**3.** Appareil de traitement d'image (100) tel que défini dans la revendication 1, dans lequel :

l'unité d'affichage et d'entrée (107) est en outre conçue pour recevoir une entrée d'un rapport entre les données image d'entrée (121), les premières données image converties (A) et les deuxièmes données image converties (B) en tant que cible de conversion finale, et

l'unité de conversion finale (106) est en outre conçue pour générer les informations de conversion finale à l'aide de coefficients de pondération, qui sont dérivés du rapport.

**4.** Appareil de traitement d'image (100) tel que défini dans la revendication 2 ou 3, dans lequel l'unité de conversion finale (106) est en outre conçue pour calculer une moyenne pondérée des informations de couleur et des informations de couleur cible à l'aide des coefficients de pondération, pour obtenir des informations de couleur cible finale, et pour générer les informations de conversion finale en fonction des informations finales de couleur cible finale.

**5.** Appareil de traitement d'image (100) tel que défini dans la revendication 2 ou 3, dans lequel l'unité de conversion finale (106) est en outre conçue pour calculer une moyenne pondérée des informations de conversion et des informations de conversion linéaire à l'aide des coefficients de pondération, pour générer les informations de conversion finale, les informations de conversion linéaire étant générées sans convertir les informations de couleur.

**6.** Appareil de traitement d'image (100) tel que défini dans l'une quelconque des revendications 1 à 5 dans lequel : l'unité de conversion finale (106) est en outre conçue pour convertir des informations de couleur dans une région autre que la région de conversion (122) dans les données image d'entrée (121) de la même manière que pour la région de conversion en fonction des informations de conversion finale, pour générer les données image finales (125).

**7.** Système de traitement d'image (200) comprenant un appareil de traitement d'image (500) et un terminal de traitement d'informations (700), qui sont connectés l'un à l'autre par le biais d'un réseau, l'appareil de traitement d'image (500) comprenant :

une unité d'extraction de région (512) conçue pour extraire une région de conversion (122) de données image d'entrée (121), la région de conversion étant une région de peau humaine dans les données image d'entrée (121) ;

une unité d'acquisition d'informations de couleur (514) conçue pour acquérir des composantes de couleur (131) de pixels comprises dans la région de conversion (122) et pour calculer une fonction de tonalité en trois dimensions (132) à partir de composantes de couleur en tant qu'informations de couleur, la fonction de tonalité (132) étant une fonction d'approximation obtenue au moyen d'une analyse de régression de manière que des distances à des groupes de données de pixels des composantes de couleur (131) sont minimales, et peuvent être illustrées sous forme de courbe pleine dans un graphique en trois dimensions ;

une unité d'acquisition d'informations de couleur cible (513) conçue pour acquérir une fonction de tonalité cible présentant le même format de données que la fonction de tonalité, en tant qu'informations de couleur, qui est une cible de conversion pour les informations de couleur, l'unité d'acquisition d'informations de couleur cible étant conçue pour acquérir au moins des premières informations de couleur cible et des deuxièmes informations de couleur cible ;

une unité de conversion (515) conçue pour : générer des premières informations de conversion en fonction des informations de couleur et des premières informations de couleur cible, générer des deuxièmes informations de conversion en fonction des informations de couleur et des deuxièmes informations de couleur cible, convertir les données image d'entrée en fonction des premières informations de conversion pour générer des premières données image converties (A), et convertir les données image d'entrée en fonction des deuxièmes informations de conversion pour générer des deuxièmes données image converties (B) ; et

une unité de conversion finale (516) conçue pour générer des informations de conversion finale en fonction d'une cible de conversion finale d'entrée, qui est une cible finale de conversion pour les informations de couleur, et pour convertir les données image d'entrée en fonction des informations de conversion finale, pour générer des données image finales (125), et

le terminal de traitement d'informations (700) comprenant une unité d'affichage et d'entrée (714) conçue pour afficher les données image d'entrée (121) et les première et deuxième données image converties (A ; B) et pour recevoir une entrée de la cible de conversion finale.

8. Procédé de traitement d'image comprenant :

une étape d'extraction de région consistant à extraire une région de conversion (122) de données image d'entrée (121), la région de conversion étant une région de peau humaine dans les données image d'entrée (121) ;

une étape d'acquisition d'informations de couleur consistant à acquérir des composantes de couleur (131) de pixels comprises dans la région de conversion (122) et calculer une fonction de tonalité en trois dimensions (132) à partir de composantes de couleur en tant qu'informations de couleur, la fonction de tonalité (132) étant une fonction d'approximation obtenue au moyen d'une analyse de régression de manière que des distances à des groupes de données de pixels des composantes de couleur (131) sont minimales, et peuvent être illustrées sous forme de courbe pleine dans un graphique en trois dimensions ;

une étape d'acquisition d'informations de couleur cible consistant à acquérir une fonction cible présentant le même format de données que la fonction de tonalité, en tant qu'informations de couleur, qui est une cible de conversion pour les informations de couleur, les informations de couleur cible comprenant des premières informations de couleur cible et des deuxièmes informations de couleur cible ;

une étape de conversion consistant à générer des premières informations de conversion en fonction des informations de couleur et des premières informations de couleur cible et générer des deuxièmes informations de conversion en fonction des informations de couleur et des deuxièmes informations de couleur cible, et convertir les données image d'entrée en fonction des premières informations de conversion pour générer des premières données image converties (A) et convertir les données image d'entrée en fonction des deuxièmes informations de conversion pour générer des deuxièmes données image converties (B) ;

une étape d'entrée d'affichage consistant à afficher les données image d'entrée (121) et les première et deuxième données image converties (A ; B), et recevoir une entrée d'une cible de conversion finale, qui est une cible finale de conversion pour les informations de couleur ; et

une étape de conversion finale consistant à générer des informations de conversion finale en fonction de la cible de conversion finale, et à convertir les données image d'entrée en fonction des informations de conversion finale, pour générer des données image finales (125).

# FIG.1

EP 2 965 499 B1

FIG.2

# FIG.3A

121

# FIG.3B

122

# FIG.4A

# FIG.4B

EP 2 965 499 B1

# FIG.5

BEFORE PROCESSING

121

PLEASE SPECIFY TARGET IMAGE

SPARKLING SKIN    TRANSPARENT SKIN

123

CLEAR    OK
         NEXT

EP 2 965 499 B1

# FIG.6A

R VALUE IN REGION FOR
IMAGE PROCESSING

# FIG.6B

G VALUE IN REGION FOR
IMAGE PROCESSING

# FIG.6C

B VALUE IN REGION FOR
IMAGE PROCESSING

# FIG.7

INPUT IMAGE

~121

~141

~124a
CONVERTED
IMAGE A

~124b
CONVERTED
IMAGE B

PLEASE SPECIFY FINAL CONVERSION TARGET

◉ POSITION SPECIFICATION

○ NUMERICAL VALUE SPECIFICATION

| INPUT IMAGE | : | CONVERTED IMAGE A | : | CONVERTED IMAGE B |
|---|---|---|---|---|
| ☐ | : | ☐ | : | ☐ |

FINAL IMAGE

~125

↩ RETURN

OK
NEXT

**FIG.8A**

INPUT IMAGE — 141

142

CONVERTED IMAGE A

CONVERTED IMAGE B

**FIG.8B**

INPUT IMAGE — 141

142

CONVERTED IMAGE A

CONVERTED IMAGE B

**FIG.8C**

INPUT IMAGE — 141

142

CONVERTED IMAGE A

CONVERTED IMAGE B

FIG.9A

FIG.9B

FIG.9C

EP 2 965 499 B1

FIG.10A

INPUT IMAGE

FIG.10B

INPUT IMAGE

EP 2 965 499 B1

# FIG.11

# FIG.12

START

S101 — EXTRACT CONVERSION REGION
FROM INPUT IMAGE DATA

S102 — ACQUIRE COLOR INFORMATION
IN CONVERSION REGION

S103 — ACQUIRE TARGET COLOR INFORMATION

S104 — GENERATE CONVERTED IMAGE DATA

S105 — DISPLAY INPUT IMAGE DATA
AND CONVERTED IMAGE DATA

S106 — RECEIVE INPUT OF FINAL CONVERSION TARGET

S107 — GENERATE FINAL IMAGE DATA

END

# FIG.13

START

S401 — GENERATE CONVERSION INFORMATION BASED ON COLOR INFORMATION AND TARGET COLOR INFORMATION

S402 — CONVERT COLOR INFORMATION USING CONVERSION INFORMATION, TO GENERATE CONVERTED IMAGE DATA

S403 — STORE CONVERTED IMAGE DATA IN STORAGE UNIT

S404 — OTHER SELECTED TARGET IMAGE DATA REMAIN?

YES

NO

END

# FIG.14

START

S711 — SET WEIGHT COEFFICIENTS BASED ON FINAL CONVERSION TARGET

S712 — CALCULATE WEIGHTED AVERAGE OF COLOR INFORMATION AND TARGET COLOR INFORMATION USING WEIGHT COEFFICIENTS

S713 — GENERATE FINAL TARGET COLOR INFORMATION BASED ON WEIGHTED AVERAGE

S714 — GENERATE FINAL CONVERSION INFORMATION BASED ON FINAL TARGET COLOR INFORMATION

S715 — CONVERT CONVERSION REGION BASED ON FINAL CONVERSION INFORMATION, TO GENERATE FINAL IMAGE DATA

END

# FIG.15

START

S721 —— SET WEIGHT COEFFICIENTS BASED ON
FINAL CONVERSION TARGET

S722 —— CALCULATE WEIGHTED AVERAGE OF CONVERSION
INFORMATION AND LINEAR CONVERSION
INFORMATION USING WEIGHT COEFFICIENTS

S723 —— GENERATE FINAL CONVERSION INFORMATION
BASED ON WEIGHTED AVERAGE

S724 —— CONVERT CONVERSION REGION BASED ON
FINAL CONVERSION INFORMATION,
TO GENERATE FINAL IMAGE DATA

END

# FIG.16

# FIG.17

# FIG.18

500

501 — CONTROL UNIT

502 — MAIN STORAGE UNIT

503 — AUXILIARY STORAGE UNIT

504 — EXTERNAL STORAGE DEVICE I/F UNIT

NETWORK I/F UNIT — 505

B

506 — RECORDING MEDIUM

EP 2 965 499 B1

FIG.19

**EP 2 965 499 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001251531 A
- US 20070133024 A1
- US 5604610 A
- US 20040227964 A1
- EP 1087614 A2
- JP 2013042608 A